# EUROPÄISCHE PATENTSCHRIFT

(11) **EP 3 612 422 B1**
(45) Veröffentlichungstag und Bekanntmachung des Hinweises auf die Patenterteilung: **07.09.2022**
(21) Anmeldenummer: 18715552.8
(22) Anmeldetag: 22.03.2018
(51) Int. Cl.: B60T 17/22, B60T 8/17, B60T 8/94

(54) **VERFAHREN ZUM ÜBERWACHEN EINER UMSETZUNG EINER AUTOMATISIERT ANGEFORDERTEN BREMSVORGABE SOWIE BREMSSYSTEM**
METHOD FOR MONITORING AN IMPLEMENTATION OF AN AUTOMATEDLY DEMANDED BRAKING PRESET, AND BRAKE SYSTEM
PROCÉDÉ SERVANT À SURVEILLER UNE MISE EN OEUVRE D'UNE SPÉCIFICATION DE FREINAGE DEMANDÉE DE MANIÈRE AUTOMATISÉE ET SYSTÈME DE FREINAGE

(30) Priorität: 20.04.2017 DE 102017003782
(43) Veröffentlichungstag der Anmeldung: 26.02.2020
(73) Patentinhaber: ZF CV Systems Europe BV, 1170 Brussels (BE)
(72) Erfinder: SCHWAGMEYER, Florian, 31700 Heuerßen (DE); WALLBAUM, Torsten, 31089 Duingen (DE)
(74) Vertreter: Rabe, Dirk-Heinrich
(86) Internationale Anmeldenummer: PCT/EP2018/057373
(87) Internationale Veröffentlichungsnummer: WO 2018/192738

(56) Entgegenhaltungen:
- EP-A1- 2 108 554
- WO-A1-2017/008879
- DE-A1-102010 048 884
- GB-A- 2 462 864
- US-A1- 2015 084 402

## Beschreibung

Die Erfindung betrifft ein Verfahren zum Überwachen einer Umsetzung einer automatisiert angeforderten Bremsvorgabe in einem Bremssystem in einem Fahrzeug, insbesondere Nutzfahrzeug, sowie ein Bremssystem, insbesondere ABS-Bremssystem, zum Durchführen des Verfahrens.

Fahrzeuge mit einem ABS-Bremssystem können zum einen in Abhängigkeit einer vom Fahrer über ein Betriebsbremsventil vorgegebenen Betriebsbrems-Bremsvorgabe abgebremst werden, indem vom Betriebsbremsventil ein entsprechender Betriebsbrems-Steuerdruck ausgegeben wird, der über Relaisventile an den Fahrzeugachsen luftmengenverstärkt und anschließend an Fahrzeug-Betriebsbremsen der jeweiligen Fahrzeugachse ausgegeben wird. Den Fahrzeug-Betriebsbremsen vorgeschaltet ist hierbei jeweils ein ABS-Steuerventil, das elektrisch gesteuert von einem Zentralmodul den an die Fahrzeug-Betriebsbremsen ausgesteuerten Betriebsbrems-Bremsdruck anpassen kann, um insbesondere auf einen Bremsschlupffall oder einen Antriebsschlupffall reagieren zu können, indem der Betriebsbrems-Bremsdruck gehalten oder reduziert wird. Entsprechend kann der Betriebsbrems-Steuerdruck über ein Anhänger-Steuerventil auch an Anhänger-Betriebsbremsen ausgegeben werden, denen ebenfalls ABS-Steuerventile für eine Schlupfregelung vorgeschaltet sind.

Weiterhin kann in einem derartigen ABS-Bremssystem auch eine automatisiert vorgegebene Assistenz-Bremsvorgabe umgesetzt werden, die dem Zentralmodul von einem externen Steuermodul im Fahrzeug zugeleitet wird. Zur Umsetzung dieser Assistenz-Bremsvorgabe ist den Relaisventilen ein Umschaltventil, insbesondere ein 3/2 Wegeventil, vorgeschaltet, das je nach Vorliegen einer Assistenz-Bremsvorgabe den vom Betriebsbremsventil ausgegebenen Betriebsbrems-Steuerdruck an das Relaisventil ausgibt oder Druckmittel aus einem Druckmittelvorrat im Fahrzeug an das Relaisventil aussteuert. Um eine abgestufte Bremswirkung mit dem Druckmittel aus dem Druckmittelvorrat zu erreichen, kann von dem Zentralmodul über die ABS-Steuerventile der letztlich an die Fahrzeug-Betriebsbremsen ausgesteuerte Betriebsbrems-Bremsdruck entsprechend angepasst werden. Eine abgestufte Bremswirkung am Anhänger kann in diesem Fall durch ein zusätzliches Druck-Steuerventil vor dem Anhänger-Steuerventil erreicht werden, das den im Druckmittelvorrat vorherrschenden Druck entsprechend anpasst und somit ähnlich zu den ABS-Steuerventilen vor den Fahrzeug-Betriebsbremsen funktioniert.

In herkömmlichen ABS-Bremssystemen ist zumindest den ABS-Steuerventilen kein Drucksensor vor- oder nachgeschaltet, so dass nicht geprüft werden kann, ob insbesondere bei Vorliegen einer automatisiert angeforderten Assistenz-Bremsvorgabe auch tatsächlich ein entsprechender Betriebsbrems-Bremsdruck in die Bremszylinder der Fahrzeug-Betriebsbremsen einströmt. Somit kann nicht geprüft werden, ob insbesondere das Umschaltventil einen mechanischen Defekt aufweist, d. h. das Umschaltventile bei Vorliegen einer Assistenz-Bremsvorgabe in die entsprechende Umschaltventil-Schaltstellung umschaltet, die erst ein Umsetzen der Assistenz-Bremsvorgabe ermöglicht.

Eine Prüfung, ob in einem Bremssystem eine Bremsvorgabe von den Fahrzeug-Betriebsbremsen umgesetzt wird und dementsprechend ein Betriebsbrems-Bremsdruck aufgebaut wird, ist in DE 199 13 381 A1 beschrieben. Demnach ist vorgesehen, dass durch eine Betätigung des Betriebsbremsventils ein Bremsgeberschalter umgeschaltet wird, der eine Spannungsquelle mit einer Auswerteeinrichtung verbindet, solange sich in den Fahrzeug-Betriebsbremsen noch kein Betriebsbrems-Bremsdruck aufgebaut hat. Findet jedoch ein zeitlich verzögerter Aufbau des Betriebsbrems-Bremsdruckes statt, wird dies von einem Drucksensor gemessen und die Verbindung zwischen der Spannungsquelle und der Auswerteeinrichtung getrennt. Anschließend wird geprüft, ob das Fahrzeug gebremst oder ungebremst ist, wobei dazu Ist-Raddrehzahlen über Raddrehzahlsensoren erfasst werden und daraus Radschlüpfe oder Radverzögerungen ermittelt werden. Daraus wird ermittelt, ob das Fahrzeug tatsächlich auch abgebremst wird oder nicht. Somit wird plausibilisiert, ob bei einer Betätigung des Betriebsbremsventils durch den Fahrer und einen darauffolgenden Anstieg des Betriebsbrems-Bremsdruckes auch tatsächlich eine Bremswirkung erreicht wird. Dazu wird insbesondere der an der Auswerteeinrichtung anliegende Potentialverlauf mit einem Soll-Potentialverlauf verglichen. Über die Ist-Raddrehzahl wird somit lediglich erfasst, ob eine Bremsung vorliegt oder nicht.

Nachteilig hierbei ist, dass diese Überprüfung lediglich dann stattfinden kann, wenn der Fahrer über das Betriebsbremsventil selbst eingreift. Weiterhin ist ein Drucksensor erforderlich, um Festzustellen ob ein Betriebsbrems-Bremsdruckaufbau stattfindet und zusammen mit dem Auswerten der Potentialverläufe auf ein korrektes Umsetzen der Bremsvorgabe zu schließen. Ist ein solcher Drucksensor, wie in einem üblichen ABS-Bremssystem, nicht vorhanden, kann eine derartige Überprüfung nicht erfolgen.

Die DE 10 2010 048 884 A1 offenbart ein Verfahren und eine Vorrichtung zur Überwachung einer Bremseinrichtung. Während Bremsvorgängen werden Radschlupf-Istwerte erfasst und mit in einer Radschlupf-Referenzkennlinie hinterlegten Radschlupf-Sollwerten verglichen. Bei zu großer Abweichung wird ein Signal als Warnhinweis auf einen verschlissenen Bremsbelag erzeugt.

Die WO 2017/008879 A1 offenbart ein Verfahren zum elektronischen Regeln der Radverzögerungen eines schlupfgeregelte und nicht-schlupfgeregelte Räder aufweisenden Fahrzeugs. Die Bremsdrücke an den Radbremsen der nicht-schlupfgeregelten Räder werden so angepasst, dass Reduktionen der Bremswirkung aufgrund einsetzender Schlupfregelung ausgeglichen werden. Es ist daher Aufgabe der Erfindung, ein Verfahren anzugeben, mit dem in einfacher und zuverlässiger Weise eine Überwachung einer Umsetzung einer automatisierten Bremsvorgabe stattfinden kann. Weiterhin ist Aufgabe der Erfindung, ein Bremssystem zur Durchführung des Verfahrens anzugeben.

Diese Aufgabe wird durch ein Verfahren nach Anspruch 1 sowie ein Bremssystem nach Anspruch 14 gelöst. Die Unteransprüche geben bevorzugte Weiterbildungen an.

Erfindungsgemäß ist demnach vorgesehen, zum Überwachen einer Umsetzung einer automatisiert angeforderten Assistenz-Bremsvorgabe in einem Bremssystem, vorzugsweise einem ABS-Bremssystem, in einem Fahrzeug, vorzugsweise Nutzfahrzeug, eine Ist-Dynamikgröße und eine Referenz-Dynamikgröße zu erfassen, wobei die Ist-Dynamikgröße eine Raddynamik zumindest eines Rades des Fahrzeuges und/oder des Anhängers, an dem die automatisiert angeforderte Assistenz-Bremsvorgabe umgesetzt werden soll, charakterisiert und die Referenz-Dynamikgröße eine aktuelle Fahrdynamik des gesamten Fahrzeuges mit ggf. angehängtem Anhänger angibt. Erfindungsgemäß werden diese beiden Dynamikgrößen miteinander verglichen, um feststellzustellen, ob sich zwischen der aktuellen Raddynamik des betreffenden Rades und der aktuellen Fahrdynamik des gesamten Fahrzeuges ein Unterschied ergibt. Erfindungsgemäß wird hierbei auf ein fehlerfreies Umsetzen der Assistenz-Bremsvorgabe geschlossen, wenn die Ist-Dynamikgröße unter Berücksichtigung einer Rausch-Abweichung zumindest zeitweise um eine Puls-Abweichung von der Referenz-Dynamikgröße abweicht.

Andererseits kann eine fehlerhafte Umsetzung der automatisiert angeforderten Assistenz-Bremsvorgabe angenommen werden, wenn die Ist-Dynamikgröße unter Berücksichtigung der Rausch-Abweichung nicht um eine Puls-Abweichung von der Referenz-Dynamikgröße abweicht, die Raddynamik des betreffenden Rades also mit der Fahrdynamik des gesamten Fahrzeuges innerhalb der Rausch-Abweichung der Assistenz-Bremsvorgabe übereinstimmt, wenn eine Assistenz-Bremsvorgabe vorliegt.

Erfindungsgemäß wird somit der Effekt ausgenutzt, dass bei einer automatisiert durchgeführten Bremsung in einem ABS-Bremssystem, infolge derer ein Betriebsbrems-Bremsdruck an Fahrzeug-Betriebsbremsen am Fahrzeug und/oder an Anhänger-Betriebsbremsen an einem möglicherweise angehängten Anhänger ansteigt oder abfällt, die Raddynamik der Räder des Fahrzeuges und/oder des Anhängers, die dadurch abgebremst werden sollen, erwartungsgemäß von einer Fahrdynamik des gesamten Fahrzeuges mit ggf. angehängtem Anhänger abweicht. Um eine solche Abweichung zu erkennen, kann in einfacher Weise eine Auswertung der entsprechenden Dynamikgrößen, die in der aktuellen Fahrsituation erfasst werden, stattfinden.

Somit ist vorteilhafterweise kein Drucksensor nötig sondern vorzugsweise lediglich Raddrehzahlsensoren zum Erfassen der Ist-Dynamikgrößen bzw. der aktuellen Raddynamik des betreffenden Rades am Fahrzeug und/oder am Anhänger und/oder ein Geschwindigkeits- und/oder Beschleunigungssensor zum Erfassen der Referenz-Dynamikgröße bzw. der aktuellen Fahrdynamik des Fahrzeuges mit ggf. angehängtem Anhänger.

Vorzugsweise werden hierbei als Ist-Dynamikgröße eine Ist-Raddrehzahl und/oder eine Ist-Radbeschleunigung verwendet, mit denen die aktuelle Raddynamik des jeweiligen Rades angegeben werden kann. Die Ist-Radbeschleunigung folgt hierbei aus der Ist-Raddrehzahl durch Bilden der mathematischen Ableitung. Somit können einfach zugängliche Größen zur Charakterisierung der Raddynamik herangezogen werden, die mit ohnehin im Fahrzeug bzw. im Anhänger vorhandenen Sensoren gemessen werden können, so dass keine Komponenten nachzurüsten sind.

Als Referenz-Dynamikgröße kann vorzugsweise eine aktuelle Fahrzeug-Ist-Beschleunigung und/oder eine aktuelle Fahrzeug-Ist-Geschwindigkeit und/oder einen Mittelwert der Ist-Dynamikgröße über die Zeit herangezogen werden. Diese Größen stellen ebenfalls einfach zugängliche Größen im Fahrzeug dar, die ein aktuelles Verhalten der Fahrdynamik des gesamten Fahrzeuges mit ggf. angehängtem Anhänger angeben. Bei der Bildung des Mittelwertes aus der Ist-Dynamikgröße kann ausgenutzt werden, dass die Ist-Dynamikgröße bei gleichbleibendem Betriebsbrems-Bremsdruck in etwa der Referenz-Dynamikgröße entspricht. Geringfügige Abweichungen, z.B. während eines Druckanstiegs oder eines Druckabfalls im Betriebsbrems-Bremsdruck oder aufgrund von Messrauschen, das durch die Rausch-Abweichung charakterisiert wird, können durch das Bilden des Mittelwertes gefiltert werden, so dass in guter Näherung auch der Mittelwert als Referenz-Dynamikgröße verwendet werden kann und daher auch ohne einen Rückgriff auf zusätzliche Sensoren abgeschätzt werden kann, ob eine Puls-Abweichung vorliegt oder nicht.

Vorzugsweise kann die Auswertung der Ist-Dynamikgrößen achsweise und/oder radweise stattfinden. Ist beispielsweise eine achsweise Ansteuerung der Fahrzeug-Betriebsbremsen und/oder der Anhänger-Betriebsbremsen infolge einer Assistenz-Bremsvorgabe vorgesehen, kann es ausreichend sein, die Ist-Dynamikgröße lediglich für ein Rad dieser Fahrzeugachse und/oder Anhängerachse zu ermitteln und mit der Referenz-Dynamikgröße zu vergleichen. Um die Genauigkeit zu verbessern, kann allerdings auch eine achsweise Betrachtung über einen Mittelwert der an der betreffenden Fahrzeugachse und/oder Anhängerachse wirkenden Ist-Dynamikgrößen stattfinden oder die Ist-Dynamikgröße für beide Räder einer Fahrzeugachse und/oder Anhängerachse separat ausgewertet werden. Zur Plausibilisierung kann die Ist-Dynamikgröße einer durch die Assistenz-Bremsvorgabe angesteuerten Fahrzeugachse und/oder Anhängerachse auch mit einer Ist-Dynamikgröße einer nicht-angesteuerten Fahrzeugachse und/oder Anhängerachse verglichen werden.

Die Auswertung der Puls-Abweichung erfolgt, indem ermittelt wird, ob die Ist-Dynamikgröße um eine bestimmte Puls-Abweichung von der Referenz-Dynamikgröße abweicht. Um ein zuverlässiges Ergebnis zu erhalten, ist ein Messrauschen zu berücksichtigen, das durch die Rausch-Abweichung charakterisiert wird, wobei die Rausch-Abweichung angibt, wie stark die die Raddynamik angebenden Messwerte, d.h. insbesondere die Ist-Raddrehzahl, lediglich aufgrund einer durchgeführten Messung durch Störungen, o.ä. vom Mittelwert abweichen.

Demnach ist eine Puls-Abweichung als eine Abweichung der Ist-Dynamikgröße von der Referenz-Dynamikgröße definiert, die über die Rausch-Abweichung hinausgeht, um sicherzustellen, dass der Unterschied zwischen der Referenz-Dynamikgröße und der Ist-Dynamikgröße nicht durch das Messrauschen selbst verursacht ist. Um auch Ausreißer in der Messung auszuschließen, entspricht die Puls-Abweichung mindestens dem doppelten der Rausch-Abweichung.

Verursacht wird die Abweichung der Dynamikgrößen, wie bereits beschrieben, vorzugsweise lediglich bei einer schnellen Änderung des Betriebsbrems-Bremsdruckes, d.h. einem Anstieg oder einem Abfallen des Betriebsbrems-Bremsdruckes, infolge einer vorliegenden Assistenz-Bremsvorgabe, wobei zum Umsetzen der automatisiert angeforderten Assistenz-Bremsvorgabe der Betriebsbrems-Bremsdruck stufenweise erhöht oder reduziert wird, vorzugsweise durch eine gepulste Ansteuerung. Dieser stufenweise Anstieg des Betriebsbrems-Bremsdruckes wird dann an die Fahrzeug-Betriebsbremsen der entsprechenden Räder des Fahrzeuges als auch an die Anhänger-Betriebsbremsen eines möglicherweise angehängten Anhängers ausgesteuert.

Somit kann für jede Stufe im Betriebsbrems-Bremsdruck, d.h. für jede gepulste Ansteuerung, ermittelt werden, ob die Ist-Dynamikgröße von der Referenz-Dynamikgröße abweicht, wobei bei der Auswertung auch berücksichtigt werden kann, in wie vielen Pulsen eine Erhöhung oder eine Reduzierung des Betriebsbrems-Bremsdruckes stattfindet und ob dieselbe Anzahl an Puls-Abweichungen während der Durchführung der Assistenz-Bremsvorgabe erfasst werden kann. Denn die Puls-Abweichung infolge der stufenweisen Erhöhung oder Reduzierung des Betriebsbrems-Bremsdruckes am betreffenden Rad sollte für jede Stufe auftreten, insofern der Betriebsbrems-Bremsdruck einen Ansprechdruck der betreffenden Fahrzeug-Betriebsbremse bzw. Anhänger-Betriebsbremse übersteigt.

Die Höhe der Puls-Abweichung kann weiterhin abhängig von der Höhe des Betriebsbrems-Bremsdruckes sein, wobei die Puls-Abweichung mit steigendem Betriebsbrems-Bremsdruck größer wird. Dadurch kann eine weitere Einflussgröße bei der Überwachung berücksichtigt werden, um die Auswertung zuverlässiger zu gestalten.

Gemäß einer bevorzugten Ausbildung wird eine stufenweise Erhöhung des Betriebsbrems-Bremsdruckes an den Fahrzeug-Betriebsbremsen zum Umsetzen der Assistenz-Bremsvorgabe durch eine Ansteuerung von ABS-Steuerventilen des ABS-Bremssystems sowie durch ein Umschalten eines Umschaltventils aus einer ersten Umschaltventil-Schaltstellung in eine zweite Umschaltventil-Schaltstellung bewirkt. Liegt demnach eine Assistenz-Bremsvorgabe vor, mit der eine Erhöhung der Bremswirkung angefordert wird, wird das Umschaltventil in die zweite Umschaltventil-Schaltstellung geschaltet, in der eine Freigabe eines Druckmittels aus einem Mehrzweck-Druckmittelvorrat erfolgt. In Abhängigkeit dessen wird zunächst ein Betriebsbrems-Bremsdruck ausgesteuert, der bevor dieser zu der jeweiligen Fahrzeug-Betriebsbremse gelangt, über die ABS-Steuerventile auf einen Wert eingestellt wird, der zur Umsetzung der Assistenz-Bremsvorgabe nötig ist, wobei dazu auf Kennlinien zurückgegriffen wird. D.h. es findet keine Druckregelung über die ABS-Steuerventile unter Verwendung eines Drucksensors statt. Die Anpassung des Betriebsbrems-Bremsdruckes erfolgt hierbei durch eine Ansteuerung von Einlassventilen und Auslassventilen im ABS-Steuerventil, die in bekannter Weise dafür sorgen können, dass der Betriebsbrems-Bremsdruck reduziert, gehalten oder erhöht werden kann.

Liegt eine Assistenz-Bremsvorgabe vor, mit der eine Reduzierung der Bremswirkung angefordert wird, d. h. eine stufenweise Reduzierung des in den Bremszylindern der Fahrzeug-Betriebsbremsen aktuell wirkenden Betriebsbrems-Bremsdruckes erforderlich ist, wird das Umschaltventil ebenfalls in die zweite Umschaltventil-Schaltstellung geschaltet und das ABS-Steuerventil sorgt entsprechend für eine stufenweise Entlüftung der Fahrzeug-Betriebsbremsen durch gepulstes Öffnen des Auslassventils im ABS-Steuerventil. Somit kann der Betriebsbrems-Bremsdruck über die ABS-Steuerventile stufenweise auf einen Wert reduziert werden, der zur Umsetzung der Assistenz-Bremsvorgabe nötig ist. Auch hier findet über die ABS-Steuerventile keine Druckregelung unter Verwendung eines Drucksensors statt.

Wird im erfindungsgemäßen Verfahren durch Vergleich der Dynamikgrößen erkannt, dass bei einer Anforderung zum Druckerhöhen oder Druckreduzieren keine fehlerfreie Umsetzung der Assistenz-Bremsvorgabe vorliegt, kann vorzugsweise darauf geschlossen werden, dass ein mechanischer Defekt des Umschaltventils oder des ABS-Steuerventils, insbesondere des Auslassventils im ABS-Steuerventil, vorliegt, wenn vorher nicht bereits ein elektrischer Defekt im Bremssystem erkannt wurde. D. h. das Umschaltventil kann für ein Druckerhöhen nicht in die zweite Umschaltventil-Schaltstellung umgeschaltet werden und demnach kann kein Druckmittel aus dem Mehrzweck-Druckmittelvorrat zur Druckerhöhung an den Betriebsbremsen über die ABS-Steuerventile bereitgestellt werden, so dass auch keine Änderung der Raddynamik und somit auch keine Abweichung der Ist-Dynamikgröße von der Referenz-Dynamikgröße vorliegen kann. Entsprechend kann bei einer Anforderung zum Druckreduzieren und bei einem mechanischen Defekt des Auslassventils über dieses in der zweiten Umschaltventil-Schaltstellung des Umschaltventils die betreffende Fahrzeug-Betriebsbremse nicht entlüftet werden, um den in den Fahrzeug-Betriebsbremsen wirkenden Betriebsbrems-Bremsdruck zu reduzieren.

Somit kann in einfacher Weise, ohne den Rückgriff auf einen Drucksensor im ABS-Bremssystem auf einen mechanischen Defekt des Umschaltventils und/oder des ABS-Steuerventils, insbesondere des Auslassventils des ABS-Steuerventils, und somit auf eine fehlerhafte Umsetzung der Assistenz-Bremsvorgabe geschlossen werden. Wird in einer derartigen Überwachung festgestellt, dass ein Defekt vorliegt, kann der Fahrer entsprechend über ein Warnsignal gewarnt und ggf. eine gerade umgesetzte Assistenz-Bremsvorgaben abgebrochen werden.

Das Umschaltventil sorgt hierbei in der zweiten Umschaltventil-Schaltstellung dafür, dass das Druckmittel aus dem Mehrzweck-Druckmittelvorrat einem Relaisventil des Bremssystems zugeführt wird, das in Abhängigkeit davon einen luftmengenverstärkten Betriebsbrems-Bremsdruck an die Fahrzeug-Betriebsbremsen des Fahrzeuges ausgibt, der in entsprechender Weise - wie oben beschrieben - vorab von den ABS-Steuerventilen beeinflusst werden kann. In einer ersten Umschaltventil-Schaltstellung wird hingegen ein von einem Betriebsbremsventil ausgegebener Betriebsbrems-Steuerdruck an das Relaisventil weiterleitet, wobei der Betriebsbrems-Steuerdruck abhängig von einer Betriebsbrems-Bremsvorgabe ist, die vorzugsweise vom Fahrer manuell vorgegeben wird. Die ABS-Steuerventile dienen in dieser ersten Umschaltventil-Schaltstellung vorzugsweise lediglich zur Umsetzung einer Bremsschlupfregelung.

Für eine Umsetzung der Assistenz-Bremsvorgabe im Anhänger, wird je nach Umschaltventil-Schaltstellung entweder das Druckmittel aus dem Druckmittelvorrat oder aber der Betriebsbrems-Steuerdruck, der beispielsweise auch an eine Vorderachse ausgesteuert wird, über eine Anhänger-Druckleitung an ein Anhänger-Steuerventil übertragen, das diesen auf ein separates Anhänger-Bremssystems im Anhänger überträgt, das die Anhänger-Betriebsbremsen daraufhin in entsprechender Höhe ansteuert. In der Anhänger-Druckleitung ist weiterhin ein Druck-Steuerventil angeordnet, das dieselbe Bauart wie die ABS-Steuerventile vor den Fahrzeug-Betriebsbremsen aufweist und dementsprechend eine Einlassventil/Auslassventil-Kombination beinhaltet.

Bei Vorliegen einer Assistenz-Bremsvorgabe wird demnach bei angeforderter Druckerhöhung das Umschaltventil in die zweite Umschaltventil-Schaltstellung geschaltet und durch entsprechende Ansteuerung der Einlassventile und Auslassventile im Druck-Steuerventil der Druck aus dem Druckmittelvorrat gemäß der Assistenz-Bremsvorgabe angepasst und an das Anhänger-Steuerventil übertragen. Für ein Druckreduzieren wird entsprechend das Auslassventil im Druck-Steuerventil angesteuert.

In vergleichbarer Weise wie oben für das Fahrzeug beschrieben, kann demnach auch für den Anhänger eine Ist-Dynamikgröße erfasst werden, indem über am Anhänger angeordnete Anhänger-Drehzahlsensoren das Raddrehverhalten der die Assistenz-Bremsvorgabe umsetzenden Räder am Anhänger erfasst wird. Diese können mit der Referenz-Dynamikgröße, die die Fahrdynamik des gesamten Fahrzeuges inkl. Anhänger angibt, verglichen und damit bei einer Nicht-Abweichung auf einen möglichen mechanischen Defekt des Umschaltventils und/oder des Druck-Steuerventils, insbesondere des Auslassventils im Druck-Steuerventil, geschlossen werden.

Elektrisch gesteuert werden die ABS-Steuerventile, das Druck-Steuerventil in der Anhänger-Druckleitung sowie das Umschaltventil dabei von einem Zentralmodul, das ebenfalls geeignet ist, das oben beschriebene erfindungsgemäße Verfahren zum Überwachen der Umsetzung der automatisiert angeforderten Assistenz-Bremsvorgabe durchzuführen.

Die Erfindung wird im Folgenden anhand mehrerer Ausführungsbeispiele näher erläutert. Es zeigen:
- Fig. 1: ein ABS-Bremssystem mit einem Vorderachs-Umschaltventil;
- Fig. 2a, b, c: Fahrdynamik- und Raddynamik-Verläufe für eine vorliegende Assistenz-Bremsvorgabe;
- Fig. 3: ein ABS-Bremssystem mit zwei Umschaltventilen; und
- Fig. 4: ein Flussdiagramm des erfindungsgemäßen Verfahrens.

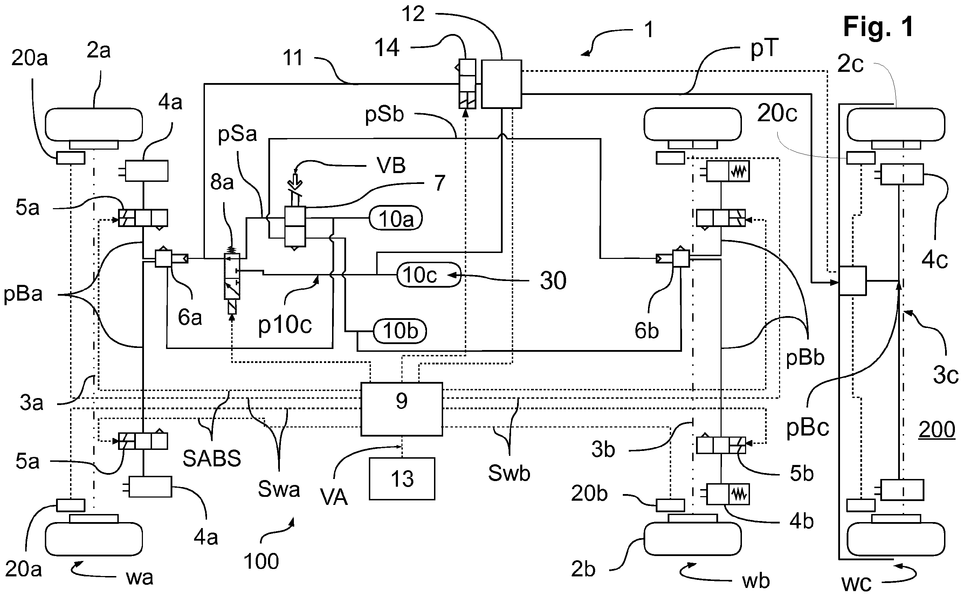

Gemäß Fig. 1 ist ein Fahrzeug 100 mit einem Bremssystem 1 dargestellt, wobei das Bremssystem 1 als ein ABS-Bremssystem ausgeführt ist. Demnach können Vorderräder 2a an einer Vorderachse 3a und Hinterräder 2b an einer Hinterachse 3b über Fahrzeug-Betriebsbremsen 4a, 4b abgebremst werden, denen jeweils ABS-Steuerventile 5a, 5b vorgeschaltet sind. Den ABS-Steuerventilen 5a, 5b ist im Druckpfad achsweise ein Relaisventil 6a, 6b vorgeschaltet, das an der jeweiligen Fahrzeugachse 3a, 3b einen Betriebsbrems-Bremsdruck pBa, pBb über die ABS-Steuerventile 5a, 5b an die Fahrzeug-Betriebsbremsen 4a, 4b aussteuert.

Die Höhe des an die jeweilige Fahrzeugachse 3a, 3b ausgesteuerten Betriebsbrems-Bremsdruckes pBa, pBb wird hierbei vom Fahrer bestimmt, der über ein zweikreisiges Betriebsbremsventil 7 eine Betriebsbrems-Bremsvorgabe VB anfordert, infolgedessen im Betriebsbremsventil 7 ein Betriebsbrems-Steuerdruck pSa, pSb erzeugt und an die Relaisventile 6a, 6b an der jeweiligen Fahrzeugachse 3a, 3b ausgegeben wird. Gemäß Fig. 1 erfolgt dies für die Hinterachse 3b auf direktem Wege und für die Vorderachse 3a über ein Vorderachs-Umschaltventil 8a. Von den Relaisventilen 6a, 6b an der jeweiligen Fahrzeugachse 3a, 3b wird der Betriebsbrems-Steuerdruck pSa, pSb in bekannter Weise luftmengenverstärkt und als Betriebsbrems-Bremsdruck pBa, pBb an die Fahrzeug-Betriebsbremsen 4a, 4b ausgegeben. Die Bereitstellung des Druckmittels im jeweiligen Bremskreis erfolgt aus Druckmittelvorräten 10a, 10b, die der jeweiligen Fahrzeugachse 3a, 3b zugeordnet sind.

Die den Fahrzeug-Betriebsbremsen 4a, 4b jeweils vorgeschalteten ABS-Steuerventile 5a, 5b können elektrisch von einem Zentralmodul 9 des Bremssystems 1 über ABS-Steuersignale SABS radindividuell angesteuert werden. Dadurch kann der von den Relaisventilen 6a, 6b ausgegebene Betriebsbrems-Bremsdruck pBa, pBb situationsabhängig radindividuell angepasst werden, um insbesondere im Rahmen einer Bremsschlupfregelung (ABS) oder einer Antriebsschlupfregelung (ASR) ein Halten oder ein Reduzieren des vom Relaisventil 6a, 6b ausgegebenen Betriebsbrems-Bremsdruckes pBa, pBb erreichen zu können. Die Anpassung des Betriebsbrems-Bremsdruckes erfolgt hierbei über eine Einlassventil/Auslassventil-Kombination im jeweiligen ABS-Steuerventil 5a, 5b, die durch entsprechende elektrische Ansteuerung für ein Halten oder ein Reduzieren des wirkenden Betriebsbrems-Bremsdruckes pBa, pBb an den Fahrzeug-Betriebsbremsen 4a, 4b sorgen können. Um einer derartige Regelung zu erreichen, wird ein Raddrehverhalten der Räder 2a, 2b über Fahrzeug-Raddrehzahlsensoren 20a, 20b radindividuell gemessen und ermittelte Raddrehzahlen wa, wb für jedes Rad 2a, 2b über Raddrehzahl-Signale Swa, Swb an das Zentralmodul 9 übermittelt, das diese verarbeitet und in Abhängigkeit davon in einer entsprechenden Regelung die ABS-Steuerventile 5a, 5b ansteuert.

Über das zusätzliche Vorderachs-Umschaltventil 8a in dem Bremssystem 1 gemäß Fig. 1 kann gesteuert vom Zentralmodul 9 über die Vorderachs-ABS-Steuerventile 5a weiterhin auch ein Erhöhen des Vorderachs-Betriebsbrems-Bremsdruckes pBa erreicht werden, wie im Folgenden beschrieben wird:
Das Vorderachs-Umschaltventil 8a ist dazu gemäß Fig. 1 als 3/2-Wegeventil ausgeführt, das in einer ersten Umschaltventil-Schaltstellung X1 das Betriebsbremsventil 7 mit einem pneumatischen Steuereingang des Vorderachs-Relaisventils 6a verbindet, so dass in der ersten Umschaltventil-Schaltstellung X1 die vom Fahrer angeforderte Betriebsbrems-Bremsvorgabe VB vom Vorderachs-Relaisventil 6a in einen Vorderachs-Betriebsbrems-Bremsdruck pBa umgesetzt wird. Entsprechend wird auch vom Hinterachs-Relaisventil 6b die Betriebsbrems-Bremsvorgabe VB in einen Hinterachs-Betriebsbrems-Bremsdruck pBb umgesetzt.

In einer zweiten Umschaltventil-Schaltstellung X2 wird ein Mehrzweck-Druckmittelvorrat 10c, der beispielsweise für eine Steuerung von Anhänger-Betriebsbremsen 4c in einem Anhänger 200 oder auch für einen nicht dargestellten Parkbremskreis verwendet werden kann, mit dem Vorderachs-Relaisventil 6a verbunden, so dass der Vorderachs-Betriebsbrems-Bremsdruck pBa in Abhängigkeit eines in dem Mehrzweck-Druckmittelvorrat 10c vorherrschenden Mehrzweckdruckmittel-Druckes p10c eines darin befindlichen Mehrzweckdruckmittels 30 festgelegt wird. Um in der zweiten Umschaltventil-Schaltstellung X2 keine maximale Bremswirkung über die Vorderachs-Betriebsbremsen 4a zu erhalten, die sich infolge des hohen Mehrzweckdruckmittel-Druckes p10c im Mehrzweck-Druckmittelvorrat 10c einstellen würde, kann gesteuert vom Zentralmodul 9 über die Vorderachs-ABS-Steuerventile 5a ein kontrollierter, abgestufter Druckaufbau mit dem Mehrzweckdruckmittel 30 aus dem Mehrzweck-Druckmittelvorrat 10c erfolgen, indem die Vorderachs-ABS-Steuerventile 5a bzw. die darin verbauten Einlassventile bzw. Auslassventile je nach gewünschter Bremswirkung angesteuert werden, bis die gewollte Bremswirkung erreicht ist.

Durch das Einstellen dieser zweiten Umschaltventil-Schaltstellung X2 kann insbesondere erreicht werden, dass in dem dargestellten Bremssystem 1, einem ABS-Bremssystem, eine an das Zentralmodul 9 elektrisch übermittelte Bremsanforderung, im Folgenden als Assistenz-Bremsvorgabe VA bezeichnet, auch über die Vorderachs-Betriebsbremsen 4a umgesetzt werden kann. Die Assistenz-Bremsvorgabe VA wird gemäß dieser Ausführungsform von einem Fahrassistenz-Steuermodul 13 vorgegeben, das beispielsweise Teil einer Umkippverhinderung (RSC), eines Abstandsregelsystems (ACC) oder eines Notbremssystems (AEBS) ist, das in einer entsprechenden Fahrsituation automatisiert eine Assistenz-Bremsvorgabe VA erzeugen und an das Zentralmodul 9 übertragen kann, um im Rahmen einer für das jeweilige Fahrassistenz-Steuermodul 13 betreffenden Regelstrategie eine Bremsung über die Vorderachs-Betriebsbremsen 4a zu veranlassen.

Umgesetzt wird diese Bremsung dann über das Vorderachs-Umschaltventil 8a, das bei Vorliegen einer solchen automatisiert vorgegebenen Assistenz-Bremsvorgabe VA von dem Zentralmodul 9 in die zweite Umschaltventil-Schaltstellung X2 geschaltet wird, um das Vorderachs-Relaisventil 6a mit dem Mehrzweckdruckmittel 30 aus dem Mehrzweck-Druckmittelvorrat 10c pneumatisch anzusteuern. Der vom Vorderachs-Relaisventil 6a daraufhin ausgesteuerte Vorderachs-Betriebsbrems-Bremsdruck pBa wird bei Vorliegen einer Anforderung zum Druckerhöhen anschließend ebenfalls gesteuert vom Zentralmodul 9 über die Vorderachs-ABS-Steuerventile 5a entsprechend der Assistenz-Bremsvorgabe VA auf einen entsprechenden Druck begrenzt und an die Vorderachs-Betriebsbremsen 4a ausgesteuert, um eine der Assistenz-Bremsvorgabe VA entsprechende Bremswirkung über die Vorderachs-Betriebsbremsen 4a zu erreichen.

Wird über die Assistenz-Bremsvorgabe VA jedoch ein Druckreduzieren angefordert, wird das Vorderachs-Umschaltventil 8a zwar ebenfalls in die zweite Umschaltventil-Schaltstellung X2 gebracht, das Vorderachs-ABS-Steuerventil 5a dann aber derartig angesteuert, dass die Vorderachs-Betriebsbremsen 4a entlüftet werden und der vom Vorderachs-Relaisventil 6a ausgesteuerte Vorderachs-Betriebsbrems-Bremsdruck pBa nicht an die Vorderachs-Betriebsbremsen 4a durchgesteuert wird. Dies erfolgt durch Öffnen des Auslassventils im Vorderachs-ABS-Steuerventil 5a.bei gleichzeitig geschlossenem Einlassventil des Vorderachs-ABS-Steuerventils 5a.

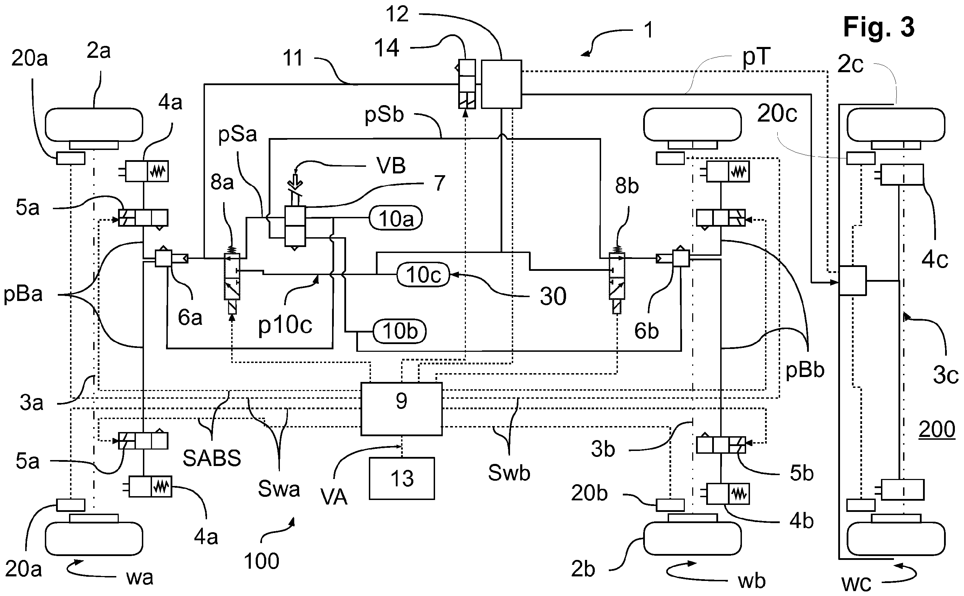

In entsprechender Weise kann ergänzend oder alternativ vorgesehen sein, dem Hinterachs-Relaisventil 6b ein Hinterachs-Umschaltventil 8b (s. Fig. 3) vorzuschalten, um entsprechend der Assistenz-Bremsvorgabe VA auch über die Hinterachs-Betriebsbremsen 4b die Hinterachse 3b abbremsen zu können.

Der vom zweikreisigen Betriebsbremsventil 7 infolge der Betriebsbrems-Bremsvorgabe VB ausgesteuerte Vorderachs-Steuerdruck pSa wird bei eingestellter erste Umschaltventil-Schaltstellung X2 ergänzend auch über eine Anhänger-Druckleitung 11 an ein Anhänger-Steuerventil 12 ausgegeben, so dass der zur Ansteuerung der Vorderachs-Betriebsbremsen 4a über das Vorderachs-Relaisventil 6a vorgesehene Vorderachs-Betriebsbrems-Steuerdruck pSa gleichzeitig über das Anhänger-Steuerventil 12 als Anhänger-Steuerdruck pT an ein angedeutetes Bremssystem im Anhänger 200 mit Anhänger-Betriebsbremsen 4c übertragen werden kann.

Gleichzeitig kann auch über ein zusätzliches Druck-Steuerventil 14 in der Anhänger-Druckleitung 11 die Assistenz-Bremsvorgabe VA im Anhänger 200 umgesetzt werden. Das Druck-Steuerventil 14 weist hierbei eine vergleichbare Bauart wie die ABS-Steuerventile 5a, 5b auf, d.h. es sind Einlassventile und Auslassventile vorgesehen, die für ein Druckerhöhen, Druckhalten und Druckreduzieren des vom Vorderachs-Umschaltventil 8a ausgegebenen Druckes sorgen können. Demnach kann in der zweiten Umschaltventil-Schaltstellung X2 des Vorderachs-Umschaltventils 8a wie bereits beschrieben der Mehrzweck-Druck p10c des vom Mehrzweck-Druckmittelvorrat 10c an das Anhänger-Steuerventil 12 übertragenen Mehrzweckdruckmittels 30 angepasst und ggf. auch ein Druckreduzieren über das Auslassventil im Druck-Steuerventil 14 erreicht werden, um die Assistenz-Bremsvorgabe VA umzusetzen.

Somit kann auch im Anhänger 200 eine der vorliegenden Bremsvorgabe VA, VB entsprechende Bremswirkung über die Anhänger-Betriebsbremsen 4c erreicht werden. Der Anhänger 200 wird dabei in diesem Ausführungsbeispiel identisch oder ggf. skaliert wie die Vorderachse 3a abgebremst.

Die pneumatische Ansteuerung der Vorderachs-Betriebsbremsen 4a über die Vorderachs-ABS-Steuerventile 5a aufgrund einer solchen automatisiert vorgegebenen Assistenz-Bremsvorgabe VA erfolgt ohne die Verwendung von Drucksensoren im ABS-Bremssystem 1. D. h. es erfolgt eine der Assistenz-Bremsvorgabe VA entsprechende elektrische Ansteuerung des Vorderachs-Umschaltventils 8a sowie der Vorderachs-ABS-Steuerventile 5a, für die z.B. gemäß einer vorab durchgeführten Parametrierung eine bestimmte Bremswirkung erwartet wird. Eine Regelung in Abhängigkeit eines tatsächlich ausgesteuerten Vorderachs-Betriebsbrems-Bremsdruckes pBa erfolgt jedoch nicht. Somit kann insbesondere von dem Zentralmodul 9 nicht festgestellt werden, welcher Vorderachs-Betriebsbrems-Bremsdruck pBa tatsächlich an die Vorderachs-Betriebsbremsen 4a ausgesteuert wird und somit ob die Assistenz-Bremsvorgabe VA auch tatsächlich umgesetzt wird. Gleiches gilt für die Anhänger-Betriebsbremsen 4c.

Eine fehlende Umsetzung kann hierbei beispielsweise durch einen mechanischen Defekt im Vorderachs-Umschaltventil 8a auftreten, d.h. das Vorderachs-Umschaltventil 8a kann nicht oder nicht vollständig in die zweite Umschaltventil-Schaltstellung X2 gebracht werden, so dass ein Druckaufbau nicht sichergestellt werden kann. Gleichzeitig kann auch das Vorderachs-ABS-Steuerventil 5a, insbesondere das Auslassventil darin, einen mechanischen Defekt aufweisen, so dass auch ein Druckreduzieren in den Vorderachs-Betriebsbremsen 4a aufgrund der Assistenz-Bremsvorgabe VA nicht sichergestellt werden kann. Dies kann zu Instabilitäten im Fahrzeug 100 und/oder im Anhänger 200 führen, da eine fehlende oder unzureichende Umsetzung an der Vorderachse 3a in dem Bremssystem 1 gemäß Fig. 1 auch zu einer fehlenden Umsetzung am Anhänger 200 über die Anhänger-Betriebsbremsen 4c führen kann. Kann im Rahmen der entsprechenden Stabilitätsregelung eine Bremsung nicht in angefordertem Maße erfolgen, kann dies beispielsweise bei einer Kurvenfahrt zu einem Aufschieben des Anhängers 200 oder einem seitlichen Ausbrechen des Fahrzeuges 100 und/oder des Anhängers 200 führen.

Um einen solchen mechanischen Defekt des Vorderachs-Umschaltventils 8a, das standardmäßig in die erste Umschaltventil-Schaltstellung X1 eingestellt ist, und/oder des Vorderachs-ABS-Steuerventils 5a und/oder ggf. des Druck-Steuerventils 14, insbesondere der darin enthaltenen Auslassventile, ohne die Verwendung eines Drucksensors im Bremssystem 1 zu erkennen, ist in einem erfindungsgemäßen Verfahren vorgesehen, nachdem das Vorliegen einer Assistenz-Bremsanforderung VA im Zentralmodul 9 erkannt und das Vorderachs-Umschaltventil 8a entsprechend umgeschaltet wurde, auszuwerten, wie sich im Speziellen die Raddynamik der Vorderräder 2a infolge der Ansteuerung des Vorderachs-Umschaltventils 8a verhält. Dies erfolgt unter Verwendung der an den Vorderrädern 2a angeordneten Raddrehzahlsensoren 20a, mit denen das Raddrehverhalten der Vorderräder 2a radindividuell erfasst werden kann. Weiterhin kann vorgesehen sein, auch die Raddynamik der Anhänger-Räder 2c einzubeziehen, an denen Anhänger-Raddrehzahlsensoren 20c angeordnet sind, über die Anhänger-Raddrehzahlen wc erfasst werden können, da diese vergleichbar zu den Vorderrädern 2a auf die Bremsung reagieren sollten. Im Folgenden wird das Verfahren der Einfachheit halber jedoch lediglich für das Fahrzeug 100 beschrieben.

Um damit auf einen mechanischen Defekt des Vorderachs-Umschaltventils 8a und/oder des Vorderachs-ABS-Steuerventils 5a schließen zu können, wird bei Vorliegen einer Assistenz-Bremsanforderung VA in Abhängigkeit von über die Vorderachs-Raddrehzahlsensoren 20a aktuell gemessenen Vorderachs-Ist-Raddrehzahlen wa-Ist die Raddynamik der Vorderräder 2a erfasst, die sich aufgrund der Umschaltung des Vorderachs-Umschaltventils 8a in die zweite Umschaltventil-Schaltstellung X2 und infolge der entsprechenden Ansteuerung der Vorderachs-ABS-Steuerventile 5a einstellt. Hierbei kann auch die Raddynamik lediglich eines der Vorderräder 2a, das infolge der Umschaltung des Vorderachs-Umschaltventils 8a und des jeweils vorgeschalteten Vorderachs-ABS-Steuerventils 5a abgebremst wird, erfolgen. Alternativ kann auch ein Mittelwert aus beiden gebremsten Vorderrädern 2a, 2b gebildet werden.

Die erfasste und ausgewertete Raddynamik wird also immer der jeweiligen Fahrzeugachse 3a, 3b zugeordnet, da sich das Raddrehverhalten der Vorderräder 2a bei einer Bremsung über die Vorderachse 3a von dem Raddrehverhalten der Hinterräder 2b bei lediglich gebremster Vorderachse 3a unterscheidet. Somit kann über diese achsweise Zuordnung eine Unterscheidung erfolgen zwischen der Fahrzeugachse 3a, 3b, an der über das Umschaltventil 8a, 8b gebremst wird, und einer Fahrzeugachse 3a, 3b, über die bei Vorliegen einer Assistenz-Bremsvorgabe VA nicht aktiv gebremst wird.

Die bei Vorliegen einer Assistenz-Bremsvorgabe VA aktuell gemessene Vorderachs-Ist-Raddrehzahl wa-Ist wird im Folgenden dazu verwendet, eine Vorderachs-Ist-Dynamikgröße zu ermitteln, die angibt, wie sich die Raddynamik der Vorderräder 2a des Fahrzeuges 100 bei Vorliegen einer Assistenz-Bremsvorgabe VA verhält bzw. verändert. Hierbei kann im einfachsten Fall als Vorderachs-Ist-Dynamikgröße direkt die gemessene Vorderachs-Ist-Raddrehzahl wa_lst verwendet werden oder aber aus der Vorderachs-Ist-Raddrehzahl wa-Ist eine Vorderachs-Radbeschleunigung dwa_lst ermittelt werden, die aus der mathematischen Ableitung der Vorderachs-Ist-Raddrehzahl wa_lst, die eine Geschwindigkeit des jeweiligen Vorderrades 2a angibt, folgt. Alternativ kann auch von einer beliebigen anderen, die Ist-Raddrehzahl wa-Ist charakterisierenden Größe ausgegangen werden. Somit kann für jedes Vorderrad 2a ermittelt werden, wie die Vorderräder 2a auf die elektrisch vorgegebene Assistenz-Bremsvorgabe VA reagieren.

In analoger Weise kann über die Hinterrad-Raddrehzahlsensoren 20b eine Hinterrad-Ist-Raddrehzahl wb_Ist und/oder daraus eine Hinterachs-Ist-Radbeschleunigung dwb_Ist oder eine diese charakterisierende Größe als Hinterachs-Ist-Dynamikgröße ermittelt werden, um die Reaktion der Hinterräder 2b auf die Assistenz-Bremsvorgabe VA zu erfassen, wenn z.B. ein Hinterachs-Umschaltventil 8b vor dem Hinterachs-Relaisventil 6b angeordnet ist und/oder um den Unterschied in der Reaktion zwischen Vorderachse 3a und Hinterachse 3b zu bestimmen. Weiterhin kann über die Anhänger-Raddrehzahlsensoren 20c eine Anhänger-Ist-Raddrehzahl wc_Ist und/oder daraus eine Anhänger-Ist-Radbeschleunigung dwc_Ist oder eine diese charakterisierende Größe als Anhänger-Ist-Dynamikgröße ermittelt werden, um die Reaktion der Anhänger-Räder 2c auf die Assistenz-Bremsvorgabe VA zu erfassen.

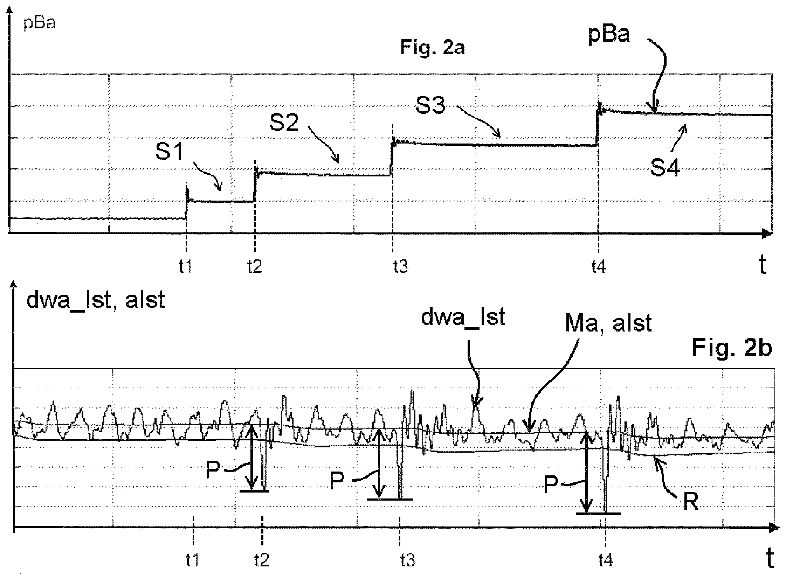

Um nun die insbesondere mechanische Funktionsfähigkeit des jeweiligen Umschaltventils 8a, 8b festzustellen, wird die über die Ist-Raddrehzahlen wa_Ist, wb_Ist, wc_Ist ermittelte Ist-Dynamikgröße für das jeweilige Rad 2a, 2b, 2c wie folgt mit einer Referenz-Dynamikgröße verglichen:
Beispielhaft ist dazu in Fig. 2a ein qualitativer zeitlicher Verlauf des Vorderachs-Betriebsbrems-Bremsdruckes pBa gezeigt, der gesteuert vom Zentralmodul 9 über die Vorderachs-ABS-Steuerventile 5a an den Vorderachs-Betriebsbremsen 4a eingestellt wird, um die Assistenz-Bremsvorgabe VA über ein oder beide Vorderräder 2a umzusetzen. Der Anstieg des Vorderachs-Betriebsbrems-Bremsdruckes pBa erfolgt hierbei stufenweise aufgrund einer gepulsten Ansteuerung der Vorderachs-ABS-Steuerventile 5a bzw. der darin enthaltenen Einlassventile, wobei gemäß dieser Ausführung vier Stufen S1, S2, S3, S4 zu vier unterschiedlichen Zeitpunkten t1, t2, t3, t4 vorliegen.

In Fig. 2b ist dem in Fig. 2a dargestellten Vorderachs-Betriebsbrems-Bremsdruck pBa die Reaktion des Fahrzeuges 100 gegenübergestellt, wobei dazu gemäß dieser Ausführung qualitativ der Verlauf der Vorderachs-Ist-Radbeschleunigung dwa_lst sowie der Verlauf einer Fahrzeug-Ist-Beschleunigung alst über die Zeit t aufgetragen sind. Da die ermittelte Vorderachs-Ist-Radbeschleunigung dwa_lst ein gewisses Rauschen aufweist, wird weiterhin ein zeitlicher Mittelwert Ma gebildet, der hier mit der Fahrzeug-Ist-Beschleunigung alst in etwa übereinstimmt. Die Vorderachs-Ist-Radbeschleunigung dwa_lst ist mit einer gewissen Rausch-Abweichung R, die als durchgezogene Linie über die Zeit t dargestellt ist, um diesen zeitlichen Mittelwert Ma verteilt, wobei die Rausch-Abweichung R hauptsächlich durch das Rauschen charakterisiert ist, d.h. eine durch die Messung selbst verursachte Abweichung der Vorderachs-Ist-Radbeschleunigung dwa_lst von dem Mittelwert Ma.

Zu erwarten ist bei einem Bremsvorgang oder auch im ungebremsten Zustand, dass die Vorderachs-Ist-Radbeschleunigung dwa_lst unter Berücksichtigung der Rausch-Abweichung R in etwa der Fahrzeug-Ist-Beschleunigung alst entspricht, da die sich drehenden Vorderräder 2a für eine entsprechende Änderung (gebremster bzw. beschleunigter Zustand) oder auch Nicht-Änderung (ungebremster Zustand) der Fahrdynamik, d. h. einer Fahrzeug-Ist-Geschwindigkeit vlst, des gesamten Fahrzeuges 100 sorgen. Der Mittelwert Ma sollte also tendenziell der Fahrzeug-Ist-Beschleunigung alst entsprechen. Dies ist für den Bremsvorgang in den Fig. 2a, 2b über eine große Zeitdauer der Fall. Abweichend davon zeigt der zeitliche Verlauf der Reaktion des Fahrzeuges 100 in Fig. 2b allerdings weiterhin, dass zu gewissen Zeitpunkten t2, t3, t4, an denen ein sprunghafter Aufbau des Vorderachs-Betriebsbrems-Bremsdruckes pBa stattfindet, die Vorderachs-Ist-Radbeschleunigung dwa_lst von der Fahrzeug-Ist-Beschleunigung alst bzw. auch vom Mittelwert Ma mehrere Male um eine Puls-Abweichung P abweicht, die weit über die Rausch-Abweichung R hinausgeht und die nicht durch das Rauschen selbst verursacht wird. Das heißt, das jeweilige Vorderrad 2a weist zu diesen Zeitpunkten t2, t3, t4 eine andere Dynamik auf als das Fahrzeug 100 selbst.

Somit kann das Vorhandensein einer gewissen Puls-Abweichung P als charakteristisch insbesondere für eine gepulst durchgeführte Bremsung über die Vorderachs-ABS-Steuerventile 5a angenommen werden, wenn sich das Vorderachs-Umschaltventil 8a in der zweiten Umschaltventil-Schaltstellung X2 befindet. Wird über das Hinterachs-Umschaltventil 8b die Hinterachse 3b oder über ein weiteres Umschaltventil eine weitere Fahrzeugachse abgebremst, gilt dies entsprechend als Charakteristik für eine gepulste Bremsung an der Hinterachse 3b über die Hinterachs-ABS-Steuerventile 5b bzw. an den weiteren Fahrzeugachse über die dieser Fahrzeugachse zugeordneten ABS-Steuerventile. Selbiges gilt bei einer Bremsung der Anhänger-Achse 3c über die Anhänger-Betriebsbremsen 4c, für die über die Anhänger-Raddrehzahlsensoren 20c ein vergleichbares Verhalten der Anhänger-Ist-Radbeschleunigung dwc_Ist zu erwarten ist, wenn in Fig. 1 das Druck-Steuerventil 14 vom Zentralmodul 9 gepulst angesteuert wird, um einen entsprechenden Anhänger-Steuerdruck pT vorzugeben, der zu einer ebenfalls gestuften Vorgabe eines Betriebsbrems-Steuerdruckes pBc an den Anhänger-Betriebsbremsen 4c sorgt. Dazu sind dann in entsprechender Weise die Ist-Raddrehzahlen der Räder an der jeweiligen Fahrzeugachse auszuwerten.

Das Vorhandensein einer Puls-Abweichung P stellt hierbei ein typisches Bremsverhalten bei gepulsten Bremsungen dar, da bei einer abrupten Veränderung des Betriebsbrems-Bremsdruckes pBa, pBb, pBc, beispielsweise bei einem abrupten Druckanstieg oder bei einer abrupten Druckreduzierung, der Reifen des jeweiligen Rades 2a, 2b, 2c erst eine bestimme Abrollstrecke zurück legen muss, damit die Umfangskräfte in der Reifenaufstandsfläche und damit die jeweilige Raddrehzahl wa, wb, wc und die Beschleunigung des Reifens wieder einen statischen Zustand annehmen. D.h. in dem Moment der sprunghaften Erhöhung der in der Reifenaufstandsfläche zu übertragenden Reibkraft muss sich das Gummiprofil des Reifens in einen neuen Zustand elastischer Verformung begeben. Dadurch, dass der alte Zustand elastischer Verformung die neue Reibkraft nicht übertragen kann, kommt es zu einer in der Reifenaufstandsfläche lokal überhöhten Verformung und damit zu einem kurzfristigen, hohen Schlupf bzw. zu einer hohen negativen Beschleunigung. Wenn der Reifen dann eine gewisse Strecke abgerollt ist, haben sich die neue Reibkraft und die neue elastische Verformung gleichmäßiger über die gesamte Reifenaufstandsfläche verteilt und sind wieder in einem statischen Zustand, so dass die Vorderachs-Ist-Radbeschleunigung dwa_Ist wieder in etwa der Fahrzeug-Ist-Beschleunigung alst entspricht.

Die Fahrzeug-Ist-Beschleunigung alst oder auch der zeitliche Mittelwert Ma können hier also als Referenz-Dynamikgrößen dienen, über die ermittelt werden kann, ob sich infolge der Assistenz-Bremsvorgabe VA an den jeweiligen Rädern 2a, 2b, 2c ein Unterschied zwischen der Raddynamik und der Fahrzeugdynamik einstellt. In dem in Fig. 2b dargestellten Verlauf liegt ein derartiger Unterschied für die Vorderachse 3a zu den Zeitpunkten t2, t3, t4 vor, zu denen die Vorderachs-Ist-Dynamikgröße dwa_lst um eine gewisse Puls-Abweichung P von der besagten Referenz-Dynamikgröße, d.h. der Fahrzeug-Ist-Beschleunigung alst, abweicht. Zum ersten Zeitpunkt t1 fehlt die Puls-Abweichung P in Fig. 2b, da durch die erste Stufe S1 im Vorderachs-Betriebsbrems-Bremsdruck pBa ein Ansprechdruck der jeweiligen Vorderachs-Betriebsbremse 2a noch nicht überschritten werden konnte und sich demnach auch keine Änderung der Raddynamik einstellen kann.

Aus dem zeitlichen Verlauf in Fig. 2b kann somit durch eine Auswertung der entsprechenden Dynamikgrößen dwa_Ist, alst erfasst werden, ob bei Vorliegen einer Assistenz-Bremsvorgabe VA, durch die gesteuert vom Zentralmodul 9 ein stufenweiser Anstieg des Vorderachs-Betriebsbrems-Bremsdruckes pBa über die Vorderachs-ABS-Steuerventile 5a und das Vorderachs-Umschaltventil 8a bewirkt wird, eine bestimmte Anzahl A an Puls-Abweichungen P auftritt. Daraus kann darauf geschlossen werden, ob die jeweilige Assistenz-Bremsvorgabe VA auch tatsächlich an diesem Vorderrad 2a bewirkt wurde. Hierbei kann beispielsweise auch anhand der Anzahl an Stufen S1, S2, S3, S4 im Vorderachs-Betriebsbrems-Bremsdruck pBa, d. h. der Anzahl an Ansteuerpulsen an das jeweilige Vorderachs-ABS-Steuerventil 5a, geprüft werden, ob diese mit der Anzahl A an Puls-Abweichungen P übereinstimmt oder eine nicht hinnehmbare Abweichung vorliegt.

Liegt also beispielsweise der Fall vor, dass bei Vorliegen einer Assistenz-Bremsvorgabe VA keine derartige Puls-Abweichung P in der Vorderachs-Ist-Dynamikgröße dwa_lst erfasst werden kann, so kann darauf geschlossen werden, dass die Assistenz-Bremsvorgabe VA von den Vorderachs-Betriebsbremsen 4a nicht umgesetzt wurde und demnach mit hoher Wahrscheinlichkeit ein mechanischer Defekt in dem der Vorderachse 3a zugeordneten Vorderachs-Umschaltventil 8a vorliegt.

Vor einer derartigen Schlussfolgerung ist jedoch zu klären, ob nicht bereits ein elektrischer Defekt, beispielsweise bei der Ansteuerung des Vorderachs-Umschaltventils 8a über das Zentralmodul 9 oder im Zentralmodul 9 selbst vorliegt. Dies kann beispielsweise im Rahmen einer Selbst-Diagnose erfolgen, die im Hintergrund durchgeführt wird.

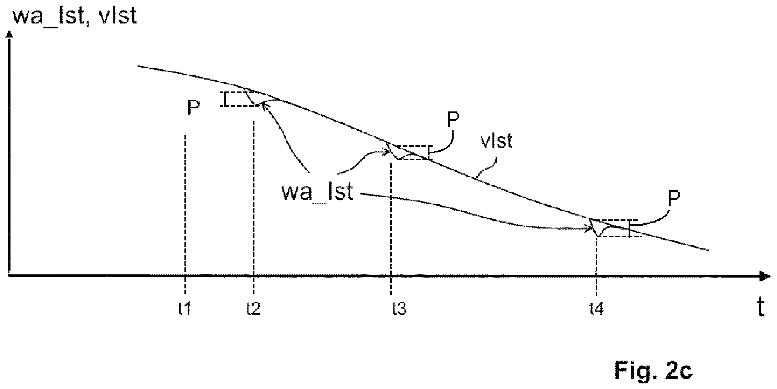

Fig. 2c zeigt für die Bremsung gemäß Fig. 2a und 2b den Vergleich der Vorderachs-Ist-Raddrehzahlen wa-Ist als Vorderachs-Ist-Dynamikgröße mit der Fahrzeug-Ist-Geschwindigkeit vlst als Referenz-Dynamikgröße, wobei die Fahrzeug-Ist-Geschwindigkeit vlst über ein Positionsermittlungssystem, z.B. GPS, oder durch einen mathematisch integrierte Längsbeschleunigung alst ermittelt werden kann, um eine verbesserte Vergleichbarkeit zu erreichen. Auch hier ist zeitweise eine Puls-Abweichung P zwischen beiden Verläufen erkennbar, da die Vorderachs-Ist-Raddrehzahlen wa-Ist für jeden Druckanstieg leicht abfallen, während die Fahrzeug-Ist-Geschwindigkeit vlst davon nahezu unbeeinflusst bleibt. Somit kann auch das Vorhandensein einer gewissen Puls-Abweichung P bereits in den Vorderachs-Ist-Raddrehzahlen wa-Ist als charakteristisch insbesondere für eine gepulst durchgeführte Bremsung über die Vorderachs-ABS-Steuerventile 5a angenommen werden, wenn sich das Vorderachs-Umschaltventil 8a in der zweiten Umschaltventil-Schaltstellung X2 befindet.

Entsprechendes gilt auch für die jeweils anderen Fahrzeugachsen sowie für den Anhänger 200.

Die Figuren 2a, 2b, 2c zeigen das Verhalten der Dynamikgrößen für einen Druckanstieg. Selbiges gilt auch für einen Druckabfall infolge einer angeforderten Reduzierung der Bremswirkung über die Assistenz-Bremsvorgabe VA. Auch dann stellt sich eine Puls-Abweichung P ein, die entsprechend gemessen werden kann, wenn ein stufenweises Reduzieren des Vorderachs-Betriebsbrems-Bremsdruckes pBa durch Entlüften der Vorderachs-Betriebsbremsen 4a über die Auslassventile in den Vorderachs-ABS-Steuerventilen 5a stattfindet. Ergibt sich bei der Auswertung, dass die Puls-Abweichung P nicht vorliegt, kann daraus also auf einen mechanischen Defekt des Vorderachs-ABS-Steuerventils 5a bzw. des darin enthaltenen Auslassventils geschlossen werden.

Entsprechendes gilt auch für die jeweils anderen Fahrzeugachsen und den diesen zugeordneten ABS-Steuerventilen sowie für den Anhänger 200 und dem diesem zugeordneten Druck-Steuerventil 14.

Die Auswertung der Raddynamik und der Fahrzeugdynamik kann ergänzend auch achsübergreifend stattfinden, indem beispielsweise ermittelt wird, ob bei Vorliegen einer Assistenz-Bremsvorgabe VA, die über das Vorderachs-Umschaltventil 8a erfolgt, die Vorderachs-Ist-Raddrehzahl walst bzw. die Vorderachs-Ist-Radbeschleunigung dwalst einen vergleichbaren zeitlichen Verlauf aufweist wie die Hinterachs-Ist-Raddrehzahl wblst bzw. die Hinterachs-Ist-Radbeschleunigung dwblst. In dem Fall ist zu erwarten, dass bei einer Bremsung lediglich an der Vorderachse 3a auch lediglich eine Puls-Abweichung P für die die Vorderachs-Ist-Dynamikgröße dwalst, walst wie oben beschrieben auftritt. Die Hinterachs-Ist-Dynamikgröße dwblst, wblst hingegen sollte mit der Referenz-Dynamikgröße alst, vlst im Wesentlichen übereinstimmen, da die Hinterräder 2b nicht abgebremst werden. Ist der Hinterachse 3b jedoch ein Hinterachs-Umschaltventil 8b zugeordnet, so wird sich bei einer entsprechenden Umschaltung in die zweite Umschaltventil-Schaltstellung X2 und einer vorliegenden Assistenz-Bremsvorgabe VA auch bei der Hinterachs-Ist-Dynamikgröße dwblst, wblst eine Puls-Abweichung P einstellen, wenn kein mechanischer Defekt im Hinterachs-Umschaltventil 8b vorliegt.

Für die Auswertung der Puls-Abweichung P kann zusätzlich der Grad bzw. die Höhe der Puls-Abweichung P insbesondere auch in Relation zur Rausch-Abweichung R berücksichtigt werden. Hierdurch kann berücksichtigt werden, dass bei höheren Druckänderungen, d. h. längeren Ansteuerzeiten des jeweiligen ABS-Steuerventils 5a, 5b, oder bei höheren Betriebsbrems-Bremsdrücken pBa, pBb, pBc eine höhere Puls-Abweichung P auftritt, da dies eine größere Auswirkung auf die Raddynamik hat.

In Fig. 3 ist das Bremssystem 1 mit zwei Umschaltventilen 8a, 8b veranschaulicht, das sich von Fig. 1 lediglich dadurch unterscheidet, dass auch an der Hinterachse 3b ein Hinterachs-Umschaltventil 8b angeordnet ist, das, wie bereits beschrieben, dafür sorgt, dass die Assistenz-Bremsvorgabe VA auch an der Hinterachse 3b umgesetzt werden kann. Alternativ kann auch lediglich an der Hinterachse 3b ein Hinterachs-Umschaltventil 8b und an der Vorderachse 3a kein Vorderachs-Umschaltventil 8a angeordnet sein, wobei dann die Anhänger-Druckleitung 11 von der Hinterachse 3b zum Anhänger-Steuerventil 12 zu führen ist, um auch im Anhänger 200 eine automatisierte Bremsung gemäß der Assistenz-Bremsvorgabe VA bewirken zu können.

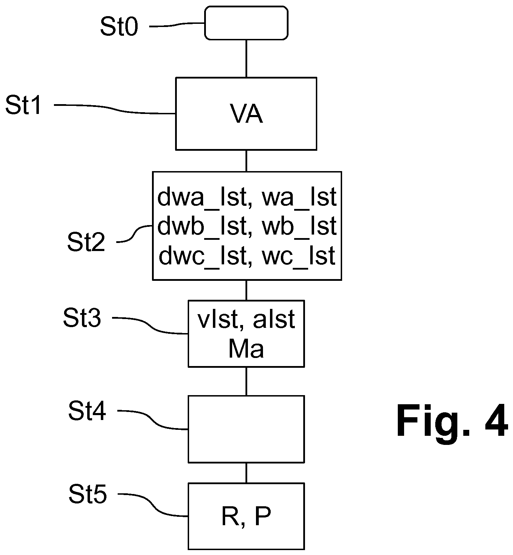

Gemäß Fig. 4 kann das erfindungsgemäße Verfahren beispielsweise folgendermaßen ausgeführt werden:
In einem anfänglichen Schritt St0 wird das Verfahren initialisiert, beispielsweise mit dem Starten des Fahrzeuges 100 und nachdem festgestellt wurde, dass kein elektrischer Defekt im Bremssystem 1 vorliegt, d. h. das Zentralmodul 9 insbesondere eine Steuerung der ABS-Steuerventile 5a, 5b und der Umschaltventile 8a, 8b und/oder des Druck-Steuerventils 14 vornehmen kann.

In einem ersten Schritt St1 wird geprüft, ob dem Zentralmodul 9 eine Assistenz-Bremsvorgabe VA vorliegt, d. h. eine Bremsung automatisiert angefordert wird. In einem zweiten Schritt St2 wird eine entsprechende Ist-Dynamikgröße, d.h. entweder die Ist-Radbeschleunigung dwa_Ist, dwb_Ist, dwc_Ist oder die Ist-Raddrehzahl wa_lst, wb_Ist, wc_Ist der betreffenden Räder 2a, 2b, 2c die infolge der automatisiert angeforderten Assistenz-Bremsvorgabe VA abgebremst werden sollen, wie oben beschrieben erfasst und dem jeweiligen Rad 2a, 2b, 2c zugeordnet.

In einem dritten Schritt St3 wird die Referenz-Dynamikgröße, d.h. die Fahrzeug-Ist-Geschwindigkeit vlst und/oder die Fahrzeug-Ist-Beschleunigung alst oder der Mittelwert Ma wie oben beschrieben ermittelt. In einem vierten Schritt St4 wird anschließend die entsprechende Ist-Dynamikgröße dwa_Ist, dwb_Ist, dwc_Ist wa_Ist, wb_Ist, wc_Ist mit der Referenz-Dynamikgröße vlst, alst, Ma verglichen. Wird hierbei festgestellt, dass bei Vorliegen einer Assistenz-Bremsvorgabe VA die entsprechende Ist-Dynamikgröße dwa_Ist, dwb_Ist, dwc_Ist, wa_lst, wb_Ist, wc_Ist unter Berücksichtigung der Rausch-Abweichung R zumindest zeitweise um die Puls-Abweichung P von der entsprechenden Referenz-Dynamikgröße vlst, alst, Ma abweicht, wird in einem fünften Schritt St5 auf eine fehlerfreie Umsetzung der automatisiert angeforderten Assistenz-Bremsvorgabe VA geschlossen. Ist dies nicht der Fall, wird auf eine fehlerhafte Umsetzung, insbesondere aufgrund eines mechanischen Defekts im jeweiligen Umschaltventil 8a, 8b wie oben beschrieben geschlossen und dies entsprechend gemeldet.

### Bezugszeichenliste (Bestandteil der Beschreibung)

- 1: Bremssystem
- 2a: Vorderräder
- 2b: Hinterräder
- 2c: Anhänger-Räder
- 3a: Vorderachse
- 3b: Hinterachse
- 3c: Anhängerachse
- 4a: Vorderachs-Betriebsbremsen
- 4b: Hinterachs-Betriebsbremsen
- 4c: Anhänger-Betriebsbremsen
- 5a: Vorderachs-ABS-Steuerventile
- 5b: Hinterachs-ABS-Steuerventile
- 6a: Vorderachs-Relaisventil
- 6b: Hinterachs-Relaisventil
- 7: Betriebsbremsventil
- 8a: Vorderachs-Umschaltventil
- 8b: Hinterachs-Umschaltventil
- 9: Zentralmodul
- 10a: Vorderachs-Druckmittelvorrat
- 10b: Hinterachs-Druckmittelvorrat
- 10c: Mehrzweck-Druckmittelvorrat
- 11: Anhänger-Druckleitung
- 12: Anhänger-Steuerventil
- 13: Fahrassistenz-Steuermodul
- 14: Druck-Steuerventil
- 20a: Vorderachs-Raddrehzahlsensoren
- 20b: Hinterachs-Raddrehzahlsensoren
- 20c: Anhänger-Raddrehzahlsensoren
- 30: Mehrzweck-Druckmittel
- 100: Fahrzeug
- 200: Anhänger

- alst: Fahrzeug-Ist-Beschleunigung
- dwa_Ist: Vorderachs-Ist-Radbeschleunigung
- dwb_Ist: Hinterachs-Ist-Radbeschleunigung
- dwc_Ist: Anhänger-Ist-Radbeschleunigung
- Ma: Mittelwert
- P: Puls-Abweichung
- pBa: Vorderachs-Betriebsbrems-Bremsdruck
- pBb: Hinterachs-Betriebsbrems-Bremsdruck
- pBc: Anhänger-Betriebsbrems-Bremsdruck
- pSa: Vorderachs-Betriebsbrems-Steuerdruck
- pSb: Hinterachs-Betriebsbrems-Steuerdruck
- pT: Anhänger-Steuerdruck
- p10c: Mehrzweckdruckmittel-Druck
- R: Rausch-Abweichung
- S1, S2, S3, S4: Stufen
- SABS: ABS-Steuersignal
- Swa, Swb: Raddrehzahl-Signale
- t1, t2, t3, t4: Zeitpunkte
- VA: Assistenz-Bremsvorgabe
- VB: Betriebsbrems-Bremsvorgabe
- vlst: Fahrzeug-Ist-Geschwindigkeit
- wa, wb, wc: Raddrehzahlen
- wa_Ist: Vorderachs-Ist-Raddrehzahlen
- wb_Ist: Hinterachs-Ist-Raddrehzahlen
- wc_Ist: Anhänger-Ist-Raddrehzahlen
- X1: erste Umschaltventil-Schaltstellung
- X2: zweite Umschaltventil-Schaltstellung

- St1, St2, St3, St4, St5: Schritte des Verfahrens

## Patentansprüche

1. Verfahren zum Überwachen einer Umsetzung einer automatisiert angeforderten Assistenz-Bremsvorgabe (VA) durch ein Bremssystem (1), insbesondere ABS-Bremssystem (1), in einem Fahrzeug (100), insbesondere Nutzfahrzeug (100), mit mindestens den folgenden Schritten:
- Erfassen, ob eine automatisiert angeforderte Assistenz-Bremsvorgabe (VA) vorliegt (St1);
- Erfassen einer Ist-Dynamikgröße (dwa_Ist, dwb_Ist, dwc_Ist, wa_Ist, wb_Ist, wc_Ist), wobei die Ist-Dynamikgröße (dwa_Ist, dwb_Ist, dwc_Ist, wa_Ist, wb_Ist, wc_Ist) eine Raddynamik (wa, wa_lst, wb, wb_Ist, wc, wc_Ist) zumindest eines Rades (2a, 2b, 2c) des Fahrzeuges (100) und/oder des Anhängers (200) charakterisiert, wobei die Ist-Dynamikgröße (dwa_Ist, dwb_Ist, dwc_Ist, wa_Ist, wb_Ist, wc_Ist) einem Rad (2a, 2b, 2c) zugeordnet wird, das infolge der automatisiert angeforderten Assistenz-Bremsvorgabe (VA) abgebremst werden soll (St2);
- Ermitteln einer Referenz-Dynamikgröße (vlst, alst, Ma), wobei die Referenz-Dynamikgröße (vlst, alst, Ma) eine Fahrdynamik (vlst) des gesamten Fahrzeuges (100) und/oder des Anhängers (200) charakterisiert (St3);
- Vergleichen der Ist-Dynamikgröße (dwa_Ist, dwb_Ist, dwc_Ist, wa_Ist, wb_Ist, wc_Ist) mit der Referenz-Dynamikgröße (vlst, alst, Ma), wobei bei Vorliegen einer Assistenz-Bremsvorgabe (VA)
- - eine fehlerfreie Umsetzung dieser automatisiert angeforderten Assistenz-Bremsvorgabe (VA) erkannt wird, wenn die Ist-Dynamikgröße (dwa_Ist, dwb_Ist, dwc_Ist, wa_lst, wb_Ist, wc_Ist) unter Berücksichtigung einer Rausch-Abweichung (R) zumindest zeitweise um eine Puls-Abweichung (P) von der Referenz-Dynamikgröße (vlst, alst, Ma) abweicht (St4, St5) und/oder
- - eine fehlerhafte Umsetzung dieser automatisiert angeforderten Assistenz-Bremsvorgabe (VA) erkannt wird, wenn die Ist-Dynamikgröße (dwa_Ist, dwb_Ist, dwc_Ist, wa_Ist, wb_Ist, wc_Ist) unter Berücksichtigung der Rausch-Abweichung (R) nicht um eine Puls-Abweichung (P) von der Referenz-Dynamikgröße (vlst, alst, Ma) abweicht.

2. Verfahren nach Anspruch 1, **dadurch gekennzeichnet, dass** die Ist-Dynamikgröße (dwa_Ist, dwb_Ist, dwc_Ist, wa_Ist, wb_Ist, wc_Ist) achsweise und/oder radweise ermittelt wird.

3. Verfahren nach Anspruch 1 oder 2, **dadurch gekennzeichnet, dass** die Ist-Dynamikgröße eine Ist-Radbeschleunigung (dwa_Ist, dwb_Ist, dwc_Ist) oder eine Ist-Raddrehzahl (wa_Ist, wb_Ist, wc_Ist) des betreffenden Rades (2a, 2b, 2c) des Fahrzeuges (100) oder des Anhängers 200) charakterisiert, wobei die Ist-Radbeschleunigung (dwa_Ist, dwb_Ist, dwc_Ist) aus Ist-Raddrehzahlen (wa_Ist, wb_Ist, wc_Ist) des betreffenden Rades (2a, 2b, 2c) ermittelt wird, wobei die Ist-Raddrehzahlen (wa_Ist, wb_Ist, wc_Ist) die aktuelle Raddynamik des betreffenden Rades (2a, 2b, 2c) angeben.

4. Verfahren nach Anspruch 3, **dadurch gekennzeichnet, dass** die Ist-Radbeschleunigung (dwa_Ist, dwb_Ist, dwc_Ist) durch eine mathematische Ableitung aus den Ist-Raddrehzahlen (wa_Ist, wb_Ist, wc_Ist) folgt.

5. Verfahren nach einem der vorhergehenden Ansprüche, **dadurch gekennzeichnet, dass** die Referenz-Dynamikgröße durch eine aktuelle Fahrzeug-Ist-Beschleunigung (alst) und/oder eine aktuelle Fahrzeug-Ist-Geschwindigkeit (vlst) und/oder einen Mittelwert (Ma) der Ist-Dynamikgröße (dwa_Ist, dwb_Ist, dwc_Ist) über die Zeit (t) angegeben wird.

6. Verfahren nach einem der vorhergehenden Ansprüche, **dadurch gekennzeichnet, dass** die Rausch-Abweichung (R) ein Rauschen in den die Raddynamik charakterisierenden Messgrößen (wa, wa_lst, wb, wb_Ist, wc, wc_Ist) angibt.

7. Verfahren nach einem der vorhergehenden Ansprüche, **dadurch gekennzeichnet, dass** die Puls-Abweichung (P) mindestens der Rausch-Abweichung (R), vorzugsweise mindestens der doppelten Rausch-Abweichung (R), entspricht.

8. Verfahren nach einem der vorhergehenden Ansprüche, **dadurch gekennzeichnet, dass** zum Umsetzen der automatisiert angeforderten Assistenz-Bremsvorgabe (VA) ein Betriebsbrems-Bremsdruck (pBa, pBb, pBc) an Betriebsbremsen (4a, 4b, 4c) an den betreffenden Rädern (2a, 2b, 2c) des Fahrzeuges (100) und/oder des Anhängers (200) stufenweise (S1, S2, S3, S4) erhöht wird.

9. Verfahren nach Anspruch 8, **dadurch gekennzeichnet, dass** ermittelt wird, ob eine Puls-Abweichung (P) infolge der stufenweisen (S1, S2, S3, S4) Erhöhung des Betriebsbrems-Bremsdruckes (pBa, pBb, pBc) am betreffenden Rad (2a, 2b, 2c) auftritt, wobei die Puls-Abweichung (P) abhängig von der Höhe des Betriebsbrems-Bremsdruckes (pBa, pBb, pBc) ist.

10. Verfahren nach Anspruch 9, **dadurch gekennzeichnet, dass** die Puls-Abweichung (P) mit steigendem Betriebsbrems-Bremsdruck (pBa, pBb, pBc) größer wird.

11. Verfahren nach Anspruch 9 oder 10, **dadurch gekennzeichnet, dass** die stufenweise (S1, S2, S3, S4) Erhöhung des Betriebsbrems-Bremsdruckes (pBa, pBb, pBc)
- an den Betriebsbremsen (4a, 4b) des Fahrzeuges (100) durch eine Ansteuerung von ABS-Steuerventilen (5a, 5b) und/oder
- an Betriebsbremsen (4c) des Anhängers (200) durch eine Ansteuerung eines Druck-Steuerventils (14),
sowie durch ein Umschalten eines Umschaltventils (8a, 8b) aus einer ersten Umschaltventil-Schaltstellung (X1, X2) in eine zweite Umschaltventil-Schaltstellung (X2), in der eine Freigabe eines Mehrzweck-Druckmittels (30) aus einem Mehrzweck-Druckmittelvorrat (10c) erfolgt, stattfindet.

12. Verfahren nach Anspruch 11, **dadurch gekennzeichnet, dass** falls keine fehlerfreie Umsetzung der Assistenz-Bremsvorgabe (VA) erkannt wurde, auf einen mechanischen Defekt des Umschaltventils (8a, 8b) und/oder des Druck-Steuerventils (14) und/oder der ABS-Steuerventile (5a, 5b) geschlossen wird und ein Warnsignal ausgegeben wird und/oder eine automatisiert angeforderte Assistenz-Bremsvorgabe (VA) abgebrochen wird.

13. Verfahren nach einem der vorhergehenden Ansprüche, **dadurch gekennzeichnet, dass** bei Vorliegen einer Assistenz-Bremsvorgabe (VA) eine fehlerfreie oder eine fehlerhafte Umsetzung dieser automatisiert angeforderten Assistenz-Bremsvorgabe (VA) durch Vergleichen der Ist-Dynamikgröße (dwa_Ist, dwb_Ist, dwc_Ist, wa_lst, wb_Ist, wc_Ist) mit der Referenz-Dynamikgröße (vlst, alst, Ma) erkannt wird, ohne auf einen Drucksensor zurückzugreifen.

14. Bremssystem (1), insbesondere ABS-Bremssystem (1), für ein Fahrzeug (100), insbesondere Nutzfahrzeug (100), mindestens aufweisend:
- ein Betriebsbremsventil (7) zur Aufnahme einer Betriebsbrems-Bremsvorgabe (VB),
- mindestens ein einer Fahrzeugachse (3a, 3b) des Fahrzeuges (100) zugeordnetes Relaisventil (6a, 6b) zur Ausgabe eines Betriebsbrems-Bremsdruckes (pBa, pBb) an Betriebsbremsen (4a, 4b) des Fahrzeuges (100),
- ein dem mindestens einen Relaisventil (6a, 6b) vorgeschaltetes Umschaltventil (8a, 8b), wobei das Umschaltventil (8a, 8b) konfiguriert ist, in einer ersten Umschaltventil-Schaltstellung (X1) einen von dem Betriebsbremsventil (7) in Abhängigkeit der Betriebsbrems-Bremsvorgabe (VB) ausgegebenen Betriebsbrems-Steuerdruck (pSa, pSb) an das mindestens eine Relaisventil (6a, 6b) weiterzuleiten zur Ausgabe des Betriebsbrems-Bremsdruckes (pBa, pBb) durch das mindestens eine Relaisventil (6a, 6b) in Abhängigkeit des Betriebsbrems-Steuerdruckes (pSa, pSb) und in einer zweiten Umschaltventil-Schaltstellung (X2) einen Druckmittelvorrat (10c) mit dem Relaisventil (6a, 6b) zu verbinden zum Ausgeben eines Betriebsbrems-Bremsdruckes (pBa, pBb) durch das mindestens eine Relaisventil (6a, 6b) in Abhängigkeit eines Mehrzweckdruckmittel-Druckes (p10c) in dem Mehrzweck-Druckmittelvorrat (10c),
- den Betriebsbremsen (4a, 4b) vorgeschaltete ABS-Steuerventile (5a, 5b) zum Anpassen des durch das mindestens eine Relaisventil (6a,6b) ausgegebenen Betriebsbrems-Bremsdruckes (pBa, pBb), und
- ein die ABS-Steuerventile (5a, 5b) sowie das Umschaltventil (8a, 8b) steuerndes Zentralmodul (9) konfiguriert zur Durchführung des Verfahrens nach einem der vorherigen Ansprüche zum Anpassen des durch das mindestens eine Relaisventil (6a,6b) ausgegebenen Betriebsbrems-Bremsdruckes (pBa, pBb) in Abhängigkeit der vorliegenden Assistenz-Bremsvorgabe (VA).

15. Bremssystem (1) nach Anspruch 14, **dadurch gekennzeichnet, dass** das Bremssystem (1) weiterhin ein Druck-Steuerventil (14) in einer Anhänger-Druckleitung (11) aufweist, wobei die Anhänger-Druckleitung (11) das Umschaltventil (8a) druckausgangsseitig mit einem Anhänger-Steuerventil (12) verbindet und das Druck-Steuerventil (14) in Abhängigkeit der Assistenz-Bremsvorgabe (VA) derartig vom Zentralmodul (9) ansteuerbar ist, dass über das Anhänger-Steuerventil (12) ein Anhänger-Steuerdruck (pT) an Anhänger-Betriebsbremsen (4c) aussteuerbar ist, der eine Umsetzung der Assistenz-Bremsvorgabe (VA) über den Anhänger (200) erlaubt.

16. Fahrzeug (100), insbesondere Nutzfahrzeug (100), mit einem Bremssystem (1) nach Anspruch 14 oder 15 konfiguriert zur Durchführung eines Verfahrens nach einem der Ansprüche 1 bis 13.

## Claims

1. A method for monitoring an implementation of an automatedly demanded assistance braking preset (VA) by a brake system (1), in particular an ABS brake system (1), in a vehicle (100), in particular a commercial vehicle (100), having at least the following steps:
- detecting whether an automatedly demanded assistance braking preset (VA) is present; detecting an actual dynamics variable (St1);
- detecting an actual dynamics variable (dwa_Ist, dwb_Ist, dwc_Ist, wa_Ist, wb_Ist, wc_Ist), wherein the actual dynamics variable (dwa_Ist, dwb_Ist, dwc_Ist, wa_Ist, wb_Ist, wc_Ist), characterizes wheel dynamics (wa, wa_Ist wb, wb_Ist, wc, wc_Ist) of at least one wheel (2a, 2b, 2c) of the vehicle (100) and/or of the trailer (200), wherein the actual dynamics variable (dwa_Ist, dwb_Ist, dwc_Ist, wa_Ist, wb_Ist, wc_Ist) is assigned to a wheel (2a, 2b, 2c) which is to be braked as a result of the automatedly demanded assistance braking preset (VA) (St2);
- determining a reference dynamics variable (vIst, aIst, Ma), wherein the reference dynamic variable (vIst, aIst,Ma) characterizes driving dynamics (vIst) of the vehicle (100) as a whole and/or of the trailer (200) (St3);
- comparing the actual dynamics variable (dwa_Ist, dwb_Ist, dwc_Ist, wa_Ist, wb_Ist, wc_Ist) with the reference dynamics variable (vIst, aIst, Ma), wherein in the event of the presence of an assistance brake preset (VA)
- - an error-free implementation of this automatedly demanded assistance braking preset (VA) is identified if the actual dynamics variable (dwa_Ist, dwb_Ist, dwc_Ist, wa_Ist, wb_Ist, wc_Ist), taking into consideration a noise deviation (R), deviates at least at times from the reference dynamics variable (vIst, aIst, Ma) by a pulse deviation (P) (St4, St5) and/or
- - an erroneous implementation of this automatedly demanded assistance braking preset (VA) is identified if the actual dynamics variable (dwa_Ist, dwb_Ist, dwc_Ist, wa_Ist, wb_Ist, wc_Ist), taking into consideration a noise deviation (R), does not deviate from the reference dynamics variable (vIst, aIst, Ma) by a pulse deviation (P).

2. The method according to claim 1, **characterized in that** the actual dynamics variable (dwa_Ist, dwb_Ist, dwc_Ist, wa_Ist, wb_Ist, wc_Ist) is determined by axle and/or by wheel.

3. The method according to claim 1 or 2, **characterized in that** the actual dynamics variable characterizes an actual wheel acceleration (dwa_Ist, dwb_Ist, dwc_Ist) or an actual wheel rotational speed (wa_Ist, wb_Ist, wc_Ist) of the relevant wheel (2a, 2b, 2c) of the vehicle (100) or of the trailer 200), wherein the actual wheel acceleration (dwa_Ist, dwb_Ist, dwc_Ist) is determined from actual wheel rotational speeds (wa_Ist, wb_Ist, wc_Ist) of the relevant wheel (2a, 2b, 2c), wherein the actual wheel rotational speeds (wa_Ist, wb_Ist, wc_Ist) specify the current wheel dynamics of the relevant wheel (2a, 2b, 2c).

4. The method according to claim 3, **characterized in that** the actual wheel acceleration (dwa_Ist, dwb_Ist, dwc_Ist) follows from a mathematical derivation from the actual wheel rotational speeds (wa_Ist, wb_Ist, wc_Ist).

5. The method according to any of the foregoing claims, **characterized in that** the reference dynamics variable is specified by a current vehicle actual acceleration (aIst) and/or by a current vehicle actual speed (vIst) and/or by a mean value (Ma) of the actual dynamics variable (dwa_Ist, dwb_Ist, dwc_Ist )over the time (t).

6. The method according to any of the foregoing claims, **characterized in that** the noise deviation (R) specifies a noise in the measured variables characterizing the wheel dynamics (wa, wa_Ist, wb, wb_Ist, wc, wc_Ist).

7. The method according to any of the foregoing claims, **characterized in that** the pulse deviation (P) corresponds at least to the noise deviation (R), preferably to at least double the noise deviation (R).

8. The method according to any of the foregoing claims, **characterized in that** to implement the automatedly demanded assistance braking preset (VA) a service brake brake pressure (pBa, pBb, pBc) on service brakes (4a, 4b, 4c) on the relevant wheels (2a, 2b, 2c) of the vehicle (100) and/or of the trailer (200) is increased incrementally (S1, S2, S3, S4).

9. The method according to claim 8, **characterized in that** it is determined whether a pulse deviation (P) occurs as a result of the incremental (S1, S2, S3, S4) increase of the service brake brake pressure (pBa, pBb, pBc) on the relevant wheel (2a, 2b, 2c,), wherein the pulse deviation (P) is dependent on the amount of the service brake brake pressure (pBa, pBb, pBc).

10. The method according to claim 9, **characterized in that** the pulse deviation (P) becomes greater with increasing service brake brake pressure (pBa, pBb, pBc).

11. The method according to claim 9 or 10, **characterized in that** the incremental (S1, S2, S3, S4) increase of the service brake brake pressure (pBa, pBb, pBc) takes place
- at the service brakes (4a, 4b) of the vehicle (100) by controlling ABS control valves (5a, 5b) and/or
- at the service brakes (4c) of the trailer (200) by a control of a pressure control valve (14),
as well as by a switching a switchover valve (8a, 8b) from a first switchover valve switching position (X1, X2) to a second switchover valve switching position (X2), in which a release of a multipurpose pressure medium (30) from a multi-purpose pressure medium supply (10c) occurs.

12. The method according to claim 11, **characterized in that**, in the event that no error-free implementation of the assistance braking preset (VA) has been identified, a mechanical defect of the switchover valve (8a, 8b) and/or of the pressure control valve (14) and/or of the ABS control valves (5a, 5b) is indicated and a warning signal is output and/or an automatedly demanded assistance braking preset (VA) is canceled.

13. The method according to any of the foregoing claims, **characterized in that** in the presence of an assistance braking preset (VA) an error-free or an erroneous implementation of this automatedly demanded assistance braking preset (VA) is identified by comparing the actual dynamics variable (dwa_Ist, dwb_Ist, dwc_Ist, wa_Ist, wb_Ist, wc_Ist) with the reference dynamics variable (vIst, aIst, Ma), without resorting to a pressure sensor.

14. A brake system (1), in particular an ABS brake system (1), for a vehicle (100), in particular a commercial vehicle (100), comprising at least:
- a service brake valve (7) for receiving a service brake brake preset (VB),
- at least one relay valve (6a, 6b) assigned to a vehicle axle (3a, 3b) of the vehicle (100) for outputting a service brake brake pressure (pBa, pBb) to service brakes (4a, 4b) of the vehicle (100),
- a switchover valve (8a, 8b) connected upstream of the at least one relay valve (6a, 6b), wherein the switchover valve (8a, 8b) is configured, in a first switchover valve switching position (X1) to forward a service brake control pressure (pSa, pSb) output by the service brake valve (7) depending on the service brake brake preset (VB) to the at least one relay valve (6a, 6b) to output the service brake brake pressure (pBa, pBb) via the at least one relay valve (6a, 6b) depending on the service brake control pressure (pSa, pSb) and in a second switchover valve switching position (X2) to connect a pressure medium supply (10c) to the relay valve (6a, 6b) to output a service brake brake pressure (pBa, pBb) via the at least one relay valve (6a, 6b) depending on a multi-purpose pressure medium pressure (p10c) in the multi-purpose pressure medium supply (10c),
- the ABS control valves (5a, 5b) connected upstream of the service brakes (4a, 4b) for adjusting the service brake brake pressure (pBa, pBb) output by the at least one relay valve (6a, 6b), and
- a central module (9) controlling the ABS control valves (5a, 5b) and the switchover valve (8a, 8b) configured to carry out the method according to any of the foregoing claims for adjusting the service brake brake pressure (pBa, pBb) output by the at least one relay valve (6a, 6b) depending on the present assistance braking preset (VA).

15. The brake system (1) according to claim 14, **characterized in that** the brake system (1) further comprises a pressure control valve (14) in a trailer pressure line (11), wherein the trailer pressure line (11) connects the switchover valve (8a) to a trailer control valve (12) on the pressure output side and that the pressure control valve (14), depending on the assistance braking preset (VA), is controlled by the central module (9) such that a trailer control pressure (pT) at trailer service brakes (4c) can be controlled via the trailer control valve (12), which permits an implementation of the assistance braking preset (VA) via the trailer (200).

16. A vehicle (100), in particular a commercial vehicle (100), having a brake system (1) according to claim 14 or 15 configured to carry out a method according to any of claims 1 to 13.

## Revendications

1. Procédé de surveillance d'une mise en œuvre d'une spécification de freinage d'assistance (VA) demandée de manière automatisée par un système de freinage (1), en particulier un système de freinage ABS (1), dans un véhicule (100), en particulier un véhicule utilitaire (100), avec au moins les étapes suivantes qui consistent à :
- saisir si une spécification de freinage d'assistance (VA) demandée de manière automatisée se présente (St1) ;
- saisir une grandeur de dynamique réelle (dwa_Ist, dwb_Ist, dwc_Ist, wa_Ist, wb_Ist, wc_Ist), dans lequel la grandeur de dynamique réelle (dwa_Ist, dwb_Ist, dwc_Ist, wa_Ist, wb_Ist, wc_Ist) caractérise une dynamique de roue (wa, wa_Ist, wb, wb_Ist, wc, wc_Ist) d'au moins une roue (2a, 2b, 2c) du véhicule (100) et/ou de la remorque (200), dans lequel la grandeur de dynamique réelle (dwa_Ist, dwb_Ist, dwc_Ist, wa_Ist, wb_Ist, wc_Ist) est attribuée à une roue (2a, 2b, 2c) qui doit être freinée à la suite de la spécification de freinage d'assistance (VA) demandée de manière automatisée (St2) ;
- établir une grandeur de dynamique de référence (vIst, a1st, Ma), dans lequel la grandeur de dynamique de référence (vIst, a1st, Ma) caractérise une dynamique de conduite (vIst) de l'ensemble du véhicule (100) et/ou de la remorque (200) (St3) ;
- comparer la grandeur de dynamique réelle (dwa_Ist, dwb_Ist, dwc_Ist, wa_Ist, wb_Ist, wc_Ist) à la grandeur de dynamique de référence (vIst, a1st, Ma), dans lequel en présence d'une spécification de freinage d'assistance (VA)
- - une mise en œuvre exempte d'erreur de cette spécification de freinage d'assistance (VA) demandée de manière automatisée est détectée lorsque la grandeur de dynamique réelle (dwa_Ist, dwb_Ist, dwc_Ist, wa_Ist, wb_Ist, wc_Ist), compte tenu d'un écart de bruit (R), s'écarte au moins temporairement d'un écart d'impulsion (P) de la grandeur de dynamique de référence (vIst, a1st, Ma) (St4, St5), et/ou
- - une mise en œuvre défectueuse de cette spécification de freinage d'assistance (VA) demandée de manière automatisée est détectée lorsque la grandeur de dynamique réelle (dwa_Ist, dwb_Ist, dwc_Ist, wa_Ist, wb_Ist, wc_Ist), compte tenu de l'écart de bruit (R), ne s'écarte pas d'un écart d'impulsion (P) de la grandeur de dynamique de référence (vIst, a1st, Ma).

2. Procédé selon la revendication 1, **caractérisé en ce que** la grandeur de dynamique réelle (dwa_Ist, dwb_Ist, dwc_Ist, wa_Ist, wb_Ist, wc_Ist) est établie par rapport à un axe et/ou par rapport à une roue.

3. Procédé selon la revendication 1 ou 2, **caractérisé en ce que** la grandeur de dynamique réelle caractérise une accélération de la roue réelle (dwa_Ist, dwb_Ist, dwc_Ist) ou une vitesse de rotation de la roue réelle (wa_Ist, wb_Ist, wc_Ist) de la roue (2a, 2b, 2c) concernée du véhicule (100) ou de la remorque (200), dans lequel l'accélération de la roue réelle (dwa_Ist, dwb_Ist, dwc_Ist) est établie à partir de vitesses de rotation de la roue réelles (wa_Ist, wb_Ist, wc_Ist) de la roue (2a, 2b, 2c) concernée, dans lequel les vitesses de rotation de la roue réelles (wa_Ist, wb_Ist, wc_Ist) donnent la dynamique de roue en cours de la roue (2a, 2b, 2c) concernée.

4. Procédé selon la revendication 3, **caractérisé en ce que** l'accélération de la roue réelle (dwa_Ist, dwb_Ist, dwc_Ist) résulte, par une déduction mathématique, des vitesses de rotation de la roue réelles (wa_Ist, wb_Ist, wc_Ist).

5. Procédé selon l'une des revendications précédentes, **caractérisé en ce que** la grandeur de dynamique de référence est donnée par une accélération réelle de véhicule (aIst) en cours et/ou une vitesse réelle de véhicule (vIst) en cours et/ou une valeur moyenne (Ma) de la grandeur de dynamique réelle (dwa_Ist, dwb_Ist, dwc_Ist) dans le temps (t).

6. Procédé selon l'une des revendications précédentes, **caractérisé en ce que** l'écart de bruit (R) donne un bruit dans les grandeurs mesurées (wa, wa_Ist, wb, wb_Ist, wc, wc_Ist) qui caractérisent la dynamique de roue.

7. Procédé selon l'une des revendications précédentes, **caractérisé en ce que** l'écart d'impulsion (P) correspond au moins à l'écart de bruit (R), de préférence au moins au double de l'écart de bruit (R).

8. Procédé selon l'une des revendications précédentes, **caractérisé en ce que**, pour mettre en œuvre la spécification de freinage d'assistance (VA) demandée de manière automatisée, une pression de freinage de frein de service (pBa, pBb, pBc) au niveau de freins de service (4a, 4b, 4c) au niveau des roues (2a, 2b, 2c) concernées du véhicule (100) et/ou de la remorque (200) est augmentée graduellement (S1, S2, S3, S4).

9. Procédé selon la revendication 8, **caractérisé en ce qu'**il est établi si un écart d'impulsion (P) survient suite à l'augmentation graduelle (S1, S2, S3, S4) de la pression de freinage de frein de service (pBa, pBb, pBc) au niveau de la roue (2a, 2b, 2c) concernée, dans lequel l'écart d'impulsion (P) dépend de la hauteur de la pression de freinage de frein de service (pBa, pBb, pBc).

10. Procédé selon la revendication 9, caractérisé en ce l'écart d'impulsion (P) s'agrandit avec l'augmentation de la pression de freinage de frein de service (pBa, pBb, pBc).

11. Procédé selon la revendication 9 ou 10, **caractérisé en ce que** l'augmentation graduelle (S1, S2, S3, S4) de la pression de freinage de frein de service (pBa, pBb, pBc) a lieu
- au niveau des freins de service (4a, 4b) du véhicule (100) par un pilotage de valves de commande ABS (5a, 5b) et/ou
- au niveau de freins de service (4c) de la remorque (200) par un pilotage d'une valve modulatrice de pression (14),
ainsi que par une commutation d'une valve de commutation (8a, 8b) depuis une première position de commutation de valve de commutation (X1, X2) vers une seconde position de commutation de valve de commutation (X2) dans laquelle une libération d'un moyen de pression polyvalent (30) se produit depuis une réserve de moyens de pression polyvalents (10c).

12. Procédé selon la revendication 11, **caractérisé en ce que** dans le cas où aucune mise en œuvre exempte d'erreur de la spécification de freinage d'assistance (VA) n'a été détectée, il est conclu à une panne mécanique de la valve de commutation (8a, 8b) et/ou de la valve modulatrice de pression (14) et/ou des valves de commande ABS (5a, 5b) et un signal d'alerte est donné et/ou une spécification de freinage d'assistance (VA) demandée de manière automatisée est interrompue.

13. Procédé selon l'une des revendications précédentes, **caractérisé en ce qu'**en présence d'une spécification de freinage d'assistance (VA), une mise en œuvre exempte d'erreur ou une mise en œuvre défectueuse de cette spécification de freinage d'assistance (VA) demandée de manière automatisée est détectée par comparaison de la grandeur de dynamique réelle (dwa_Ist, dwb_Ist, dwc_Ist, wa_Ist, wb_Ist, wc_Ist) avec la grandeur de dynamique de référence (vIst, a1st, Ma), sans recourir à un capteur de pression.

14. Système de freinage (1), en particulier système de freinage ABS (1), pour un véhicule (100), en particulier un véhicule utilitaire (100), qui présente au moins :
- une valve de frein de service (7) pour recevoir une spécification de freinage de frein de service (VB),
- au moins une valve-relais (6a, 6b) attribuée à un essieu de véhicule (3a, 3b) du véhicule (100) pour donner une pression de freinage de frein de service (pBa, pBb) à des freins de service (4a, 4b) du véhicule (100),
- une valve de commutation (8a, 8b) montée en amont de la au moins une valve-relais (6a, 6b), dans lequel la valve de commutation (8a, 8b) est configurée pour, dans une première position de commutation de valve de commutation (X1), transférer à la au moins une valve-relais (6a, 6b) une pression de commande de frein de service (pSa, pSb) donnée par la valve de frein de service (7) en fonction de la spécification de freinage de frein de service (VB) afin de donner la pression de freinage de frein de service (pBa, pBb) par la au moins une valve-relais (6a, 6b) en fonction de la pression de commande de frein de service (pSa, pSb) et pour, dans une seconde position de commutation de valve de commutation (X2), relier une réserve de moyens de pression (10c) avec la valve-relais (6a, 6b) afin de donner une pression de freinage de frein de service (pBa, pBb) par la au moins une valve-relais (6a, 6b) en fonction d'une pression de moyen de pression polyvalent (plOc) dans la réserve de moyens de pression polyvalents (10c),
- des valves de commande ABS (5a, 5b) montées en amont des freins de service (4a, 4b) pour ajuster la pression de freinage de frein de service (pBa, pBb) donnée par la au moins une valve-relais (6a, 6b), et
- un module central (9) qui commande les valves de commande ABS (5a, 5b) ainsi que la valve de commutation (8a, 8b), configuré pour exécuter le procédé selon l'une des revendications précédentes afin d'ajuster la pression de freinage de frein de service (pBa, pBb) donnée par la au moins une valve-relais (6a, 6b) en fonction de la spécification de freinage d'assistance (VA) présente.

15. Système de freinage (1) selon la revendication 14, **caractérisé en ce que** le système de freinage (1) présente en outre une valve modulatrice de pression (14) dans une conduite de pression de remorque (11), dans lequel la conduite de pression de remorque (11) relie la valve de commutation (8a) avec une valve modulatrice de remorque (12) du côté de la sortie de pression et la valve modulatrice de pression (14) peut être pilotée par le module central (9) en fonction de la spécification de freinage d'assistance (VA) de sorte qu'une pression de commande de remorque (pT) puisse être pilotée au niveau de freins de service de remorque (4c) via la valve modulatrice de remorque (12), laquelle pression de commande de remorque permet une mise en œuvre de la spécification de freinage d'assistance (VA) via la remorque (200).

16. Véhicule (100), en particulier véhicule utilitaire (100), avec un système de freinage (1) selon la revendication 14 ou 15, configuré pour exécuter un procédé selon l'une des revendications 1 à 13.
